# EUROPEAN PATENT APPLICATION

(11) **EP 4 826 874 A1**
(43) Date of publication of application: **21.10.2026**
(21) Application number: 24923259.6
(22) Date of filing: 21.08.2024
(51) Int. Cl.: H01M 50/244, H01M 50/267, H01M 50/249

(54) **BATTERY AND ELECTRICAL APPARATUS**

(30) Priority: 06.02.2024 CN 202420286892 U
(71) Applicant: Contemporary Amperex Technology Co., Limited, Ningde, Fujian 352100 (CN)
(72) Inventor: YANG, Haiqi, Ningde, Fujian 352100 (CN); ZHAO, Wenwen, Ningde, Fujian 352100 (CN); TANG, Yu, Ningde, Fujian 352100 (CN); CAO, Shanshan, Ningde, Fujian 352100 (CN); HUANG, Xiaoteng, Ningde, Fujian 352100 (CN)
(74) Representative: Ziebig Hengelhaupt Intellectual Property Attorneys Patentanwaltskanzlei PartGmbB
(86) International application number: PCT/CN2024/113693
(87) International publication number: WO 2025/167049

(57) **Abstract**

A battery and a power consuming apparatus are provided, and belong to the field of battery technologies. The battery (100) includes a box-body assembly (1) and a plug-in assembly (4). The box-body assembly (1) includes a first wall (111). A first penetration hole (1111) is provided on the first wall (111). The plug-in assembly (4) is mounted to the box-body assembly (1) and includes a plug-in member (41) and an adapter (42). The plug-in member (41) includes a mounting portion (411) and a power connection portion (412). The mounting portion (411) is located on an outer side of the first wall (111). The power connection portion (412) includes an external power connection end (4121) located on a side of the mounting portion (411) away from the first wall (111) and an internal power connection end (4122) located on a side of the mounting portion (411) close to an interior of the box-body assembly (1). The internal power connection end (4122) is disposed corresponding to the first penetration hole (111). At least a part of the adapter (42) is located outside the box-body assembly (1) and supports the mounting portion (411), to space the mounting portion (411) from the first wall (111).

## Description

### CROSS-REFERENCE TO RELATED APPLICATIONS

The present application claims priority to Chinese Patent Application No. 202420286892.5, filed on February 6, 2024 and entitled "BATTERY AND POWER CONSUMING APPARATUS", which is incorporated herein by reference in its entirety.

### TECHNICAL FIELD

The present application relates to the field of battery technologies, and in particular, to a battery and a power consuming apparatus.

### BACKGROUND

In recent years, new energy vehicles have been rapidly developed. In the field of electric vehicles, batteries, as a power source of electric vehicles, play an important role that is irreplaceable. However, for different vehicle models, the battery structure needs to be adjusted accordingly, to meet requirements on mounting and electrical connection of the battery to the vehicle.

### SUMMARY

Embodiments of the present application provided a battery and a power consuming apparatus, to help improve universality of the battery.

According to a first aspect, an embodiment of the present application provides a battery, including a box-body assembly and a plug-in assembly. The box-body assembly includes a first wall. A first penetration hole is provided on the first wall. The plug-in assembly is mounted to the box-body assembly and includes a plug-in member and an adapter. The plug-in member includes a mounting portion and a power connection portion. The mounting portion is located on an outer side of the first wall. The power connection portion includes an external power connection end located on a side of the mounting portion away from the first wall and an internal power connection end located on a side of the mounting portion close to an interior of the box-body assembly. The internal power connection end is disposed corresponding to the first penetration hole. At least a part of the adapter is located outside the box-body assembly and supports the mounting portion, to space the mounting portion from the first wall.

In the foregoing technical solution, the adapter is disposed at a position at which the first wall cooperates with the plug-in member, so that a relative position between the plug-in member and the first wall can be changed based on different sizes of the adapter. Therefore, for different power consuming apparatuses, a size of the box-body assembly does not need to be differentially designed, and a size of the plug-in member does not need to be differentially designed. Only an adapter with a suitable size needs to be selected based on actual conditions of the different power consuming apparatuses, to space the plug-in member from the first wall by a suitable spacing, thereby satisfying applicability of the battery to the different power consuming apparatuses, implementing universality of the box-body assembly and the plug-in member, and reducing production costs.

In some embodiments, the adapter includes a support portion. The support portion is disposed between the first wall and the mounting portion to support the mounting portion.

In the foregoing technical solution, because the adapter includes the support portion disposed between the first wall and the mounting portion, and the support portion is disposed corresponding to the mounting portion, the support portion supports the plug-in member more reliably and stably, so that the plug-in member can be electrically connected to a mutual-plugging structure of a power consuming apparatus stably, thereby improving stability and reliability of supplying power to the power consuming apparatus by the battery. In addition, cooperation between the adapter and the plug-in member is compact, to help reduce overall space occupation of the plug-in assembly.

In some embodiments, the support portion is disposed surrounding the first penetration hole. A second penetration hole corresponding to the first penetration hole is provided on the support portion. The power connection portion is inserted into the second penetration hole.

In the foregoing technical solution, the support portion helps support the mounting portion in a larger range, so that stability of supporting the plug-in member is further improved. In addition, a form and a disposition position of the adapter help improve sealing performance of the box-body assembly at a mounting position of the plug-in member, thereby improving reliability of the battery. In addition, the support portion can further shield the power connection portion, to improve a risk such as short circuiting or electric leakage of the power connection portion, thereby improving the reliability of the battery.

In some embodiments, a first sealing member is disposed between the support portion and the first wall. The first sealing member is disposed surrounding the first penetration hole.

In the foregoing technical solution, the first sealing member is disposed, so that sealing performance at a position at which the adapter cooperates with the box-body assembly can be improved, to help improve the sealing performance of the box-body assembly at the mounting position of the plug-in member, thereby improving the reliability of the battery. In addition, a manner of disposing the first sealing member between the adapter and the first wall is simple and easy to implement, thereby reducing sealing difficulty and improving a sealing effect.

In some embodiments, an end surface of the support portion facing the first wall has an annular groove. The first sealing member is embedded in the groove.

In the foregoing technical solution, the first sealing member is embedded in the groove, so that mounting stability of the first sealing member can be improved, and sealing reliability at a position at which the first wall cooperates with the adapter can be improved. In addition, the groove is processed on the adapter instead of on the first wall, so that processing difficulty and production costs of the box-body assembly can be reduced. In addition, the groove is processed on the adapter, to help improve a depth of the groove, so as to improve stability of cooperation between the first sealing member and the groove, thereby improving sealing reliability of the first sealing member.

In some embodiments, a second sealing member is disposed between the support portion and the mounting portion. The second sealing member is disposed surrounding the second penetration hole.

In the foregoing technical solution, the second sealing member is disposed, so that sealing performance at a position at which the adapter cooperates with the plug-in member can be improved, to help improve the sealing performance of the box-body assembly at the mounting position of the plug-in member, thereby improving the reliability of the battery. In addition, a manner of disposing the second sealing member between the adapter and the mounting portion is simple and easy to implement, thereby reducing sealing difficulty and improving a sealing effect.

In some embodiments, the support portion includes an end plate portion and a surrounding plate portion. The surrounding plate portion is disposed surrounding the first penetration hole. The end plate portion is connected to an end of the surrounding plate portion away from the first wall. The mounting portion is supported on a side of the end plate portion away from the first wall. The second penetration hole extends through the end plate portion. An avoidance cavity having an opening facing the first wall is formed between the end plate portion and the surrounding plate portion. The avoidance cavity communicates with the first penetration hole and the second penetration hole. A cross-sectional area of the avoidance cavity is larger than a cross-sectional area of the second penetration hole.

In the foregoing technical solution, the adapter may be formed into a cover form, so that a weight and costs can be reduced.

In some embodiments, the surrounding plate portion includes a first surrounding plate segment and a second surrounding plate segment that are sequentially arranged in a direction from the end plate portion to the first wall. A wall thickness of the first surrounding plate segment gradually decreases in the direction from the end plate portion to the first wall. A wall thickness of the second surrounding plate segment is greater than a wall thickness of an end portion of the first surrounding plate segment close to the first wall.

In the foregoing technical solution, the first surrounding plate portion is gradually thickened toward a direction close to the end plate portion, so that connection strength between the surrounding plate portion and the end plate portion can be improved, and stability of supporting the end plate portion by the surrounding plate portion can be improved. The wall thickness of the second surrounding plate segment is set to be greater than the wall thickness of the end portion of the first surrounding plate segment close to the first wall, so that stability that the surrounding plate portion is supported on the first wall can be improved, thereby improving stability of supporting the plug-in member by the adapter. Therefore, the plug-in member can be electrically connected to the mutual-plugging structure of the power consuming apparatus stably, thereby improving the stability and reliability of supplying power to the power consuming apparatus by the battery.

In some embodiments, a through hole is provided on the support portion. The through hole is provided corresponding to the first penetration hole. a hole opening formed by the through hole on a surface of a side of the support portion away from the first wall forms the second penetration hole.

In the foregoing technical solution, a structure of the adapter can be simplified, to facilitate processing of the adapter, and help improve support strength of the adapter.

In some embodiments, the adapter is entirely located on the outer side of the first wall.

In the foregoing technical solution, the adapter is entirely disposed outside the box-body assembly, so that mounting, replacement, and the like of the adapter can be directly performed on an outer side of the box-body assembly, thereby facilitating mounting and dismounting of the adapter. In addition, the adapter does not occupy space in the box-body assembly, to help ensure a capacity of the battery.

In some embodiments, the plug-in member is connected to the adapter, and the adapter is connected to the first wall.

In the foregoing technical solution, it is beneficial to improve connection reliability between the plug-in member and the adapter, and it is beneficial to improve connection reliability between the adapter and the first wall, thereby improving reliability that the plug-in assembly is mounted to the box-body assembly.

In some embodiments, the adapter includes the support portion. The support portion is disposed between the first wall and the mounting portion to support the mounting portion. The mounting portion is connected to the support portion.

In the foregoing technical solution, because the adapter includes the support portion disposed between the first wall and the mounting portion, and the support portion is disposed corresponding to the mounting portion, the support portion supports the plug-in member more reliably and stably. In addition, the plug-in member is connected at a position at which the adapter supports the plug-in member, so that difficulty in connecting the adapter to the plug-in member can be reduced, and a structural design is simplified.

In some embodiments, the mounting portion is connected to the support portion by a first connection member. The first connection member includes a first rod portion and a first head portion. The first head portion abuts against a side of the mounting portion away from the support portion. The first rod portion extends through the mounting portion and is connected to the support portion.

In the foregoing technical solution, the plug-in member and the adapter may be assembled on an outer side, thereby improving assembly convenience. In addition, the adapter and the plug-in member may be first mounted before the adapter is connected to the first wall, or the adapter and the plug-in member may be subsequently mounted after the adapter is connected to the first wall, so that assembly steps are flexible.

In some embodiments, the adapter further includes a connection portion. The connection portion is located at a periphery of the support portion and extends beyond a coverage area of the mounting portion. The connection portion is connected to the first wall.

In the foregoing technical solution, because the adapter further includes the connection portion located at the periphery of the support portion, and the connection portion extends beyond the coverage area of the mounting portion, a position at which the connection portion is connected to the first wall may be staggered from a position at which the support portion is connected to the mounting portion, so that connection between the connection portion and the first wall does not affect support of the support portion to the mounting portion and connection between the support portion and the mounting portion. Therefore, there is no sequential requirement on a step of connecting the mounting portion to the support portion and a step of connecting the connection portion to the first wall, so that assembly is flexible.

In some embodiments, the connection portion is connected to the first wall by a second connection member. The second connection member includes a second rod portion and a second head portion. The second head portion abuts against a side of the connection portion away from the first wall. The second rod portion extends through the connection portion and is connected to the first wall.

In the foregoing technical solution, the adapter and the box-body assembly may be assembled on an outer side, thereby improving assembly convenience. In addition, the adapter and the box-body assembly may be first mounted before the adapter and the plug-in member, or the adapter and the box-body assembly may be subsequently mounted after the adapter is connected to the plug-in member, so that assembly steps are flexible.

In some embodiments, the adapter further includes an oblique reinforcing rib connected between the support portion and the connection portion.

In the foregoing technical solution, structural strength of the adapter can be improved, so that not only the connection reliability between the adapter and the first wall, but also reliability of supporting the plug-in member by the adapter, can be improved.

In some embodiments, the support portion is connected to the first wall by a third connection member. The third connection member includes a third rod portion and a third head portion. The third head portion abuts against an inner side of the first wall. The third rod portion extends through the first wall and is connected to the support portion.

In the foregoing technical solution, the adapter and the box-body assembly may be assembled on the inner side, to help reduce a volume and occupied space of the adapter. In addition, when the mounting portion is connected to the support portion by the first connection member, the adapter and the box-body assembly may be first mounted before the adapter and the plug-in member, or the adapter and the box-body assembly may be subsequently mounted after the adapter is connected to the plug-in member, so that the assembly steps are flexible. In addition, when the adapter is connected to the first wall, only the adapter and the first wall need to be aligned, and when the adapter is connected to the plug-in member, only the adapter and the plug-in member need to be aligned, so that assembly difficulty can be reduced, and assembly efficiency can be further improved.

In some embodiments, a position at which the support portion is connected to the mounting portion is staggered from a position at which the support portion is connected to the first wall.

In the foregoing technical solution, when a wall thickness of the support portion is small, the foregoing two connection positions are set to be staggered, so that connection requirements can be satisfied by using wall thicknesses at different positions of the support portion respectively. Certainly, if the wall thickness of the support portion is sufficient, the foregoing two connection positions may alternatively be set to correspond to each other, or the foregoing two connection positions may be set to be staggered, thereby implementing flexible design.

In some embodiments, the plug-in member, the adapter, and the first wall are connected together by a fourth connection member.

In the foregoing technical solution, it is beneficial to reduce a volume and occupied space of the adapter, and reduce a quantity of used connection members, thereby reducing costs.

In some embodiments, the fourth connection member includes a fourth rod portion and a fourth head portion. The fourth head portion abuts against a side of the mounting portion away from the adapter. The fourth rod portion extends through the mounting portion and the adapter and is connected to the first wall.

In the foregoing technical solution, the plug-in assembly and the box-body assembly may be assembled on an outer side, thereby improving assembly convenience.

In some embodiments, a spacing distance between the mounting portion and the first wall is greater than a wall thickness of the mounting portion in an axial direction of the first penetration hole.

In the foregoing technical solution, when the spacing distance between the mounting portion and the first wall is large, it is more necessary to provide the adapter between the plug-in member and the box-body assembly that satisfies requirements on support strength and sealing.

In some embodiments, the box-body assembly includes a box body. The battery includes a cell assembly disposed in the box body. The cell assembly includes a plurality of battery cells. The battery includes a temperature adjustment member. The temperature adjustment member includes at least one of a first temperature adjustment member, a second temperature adjustment member, and a third temperature adjustment member. The first temperature adjustment member is disposed outside the box body and is attached to an outer wall of the box body. The second temperature adjustment member is disposed in the box body and is located between the cell assembly and the box-body assembly. The third temperature adjustment member is disposed in the box body and is located between neighboring ones of the battery cells.

In the foregoing technical solution, the battery may include only one of the first temperature adjustment member, the second temperature adjustment member, and the third temperature adjustment member, or may include two of the first temperature adjustment member, the second temperature adjustment member, and the third temperature adjustment member, or may include all of the first temperature adjustment member, the second temperature adjustment member, and the third temperature adjustment member. In this way, a proper position may be selected for disposition of the temperature adjustment member based on an actual situation, to satisfy a temperature adjustment requirement of the battery.

In some embodiments, the box-body assembly includes the box body that is integrally stamped and formed. The box body includes a bottom wall and an enclosure wall. A side wall of the enclosure wall forms the first wall.

In the foregoing technical solution, because the bottom wall and the enclosure wall of the box body are integrally stamped and formed, a sealing problem does not need to be considered at a position at which the bottom wall is connected to the enclosure wall, so that a sealing effect can be ensured. Therefore, an impact of muddy water on the cell assembly when the muddy water infiltrates into the box body through the position at which the bottom wall is connected to the enclosure wall can be avoided, thereby improving the reliability of the battery. In addition, the integrally stamped and formed box body requires no splicing, so that production efficiency can be improved. In addition, the plug-in member is disposed on a side surface, instead of a bottom surface or a top surface, of the box-body assembly, to help reduce difficulty in connecting the plug-in member to the mutual-plugging structure of the power consuming apparatus.

In some embodiments, the cell assembly is disposed in the box body. A heat exchange member is laid on the bottom wall of the box body. The heat exchange member is configured to exchange heat with the cell assembly.

In the foregoing technical solution, a heat exchange area between the heat exchange member and the cell assembly can be improved, thereby improving a temperature adjustment effect on the cell assembly.

In some embodiments, the heat exchange member includes at least one first heat exchange flow channel. The first heat exchange flow channel includes a first heat exchange segment, a second heat exchange segment, and a third heat exchange segment. The second heat exchange segment is bent to form a first U-shaped region. The first heat exchange segment is disposed in the first U-shaped region in a bent manner, and is connected to the second heat exchange segment through the third heat exchange segment in a bent manner. The second heat exchange segment is located on an outermost peripheral side of the first heat exchange flow channel.

In the foregoing technical solution, the second heat exchange segment is bent to form the first U-shaped region, the first heat exchange segment is disposed in the first U-shaped region in a bent manner, and the second heat exchange segment is set to be located on the outermost peripheral side of the first heat exchange flow channel. When the heat exchange member in this embodiment is used to exchange heat with the cell assembly, at least a part of the first U-shaped region formed by the second heat exchange segment at the periphery may be opposite to at least a part of the battery cells at the periphery of the cell assembly, so that the second heat exchange segment can exchange heat with at least the part of the battery cells at the periphery of the cell assembly. The first heat exchange segment in the first U-shaped region is opposite to internal ones of the battery cells, so that the heat exchange member can compensate for a temperature difference between the interior and the exterior that is caused by heat exchange between the battery cells at the periphery and an environment. Therefore, a heat exchange effect of the battery cells at the periphery of the cell assembly and a heat exchange effect of the battery cells in the interior of the cell assembly tend to be consistent, to help improve a temperature difference of the cell assembly in different environments, and improve temperature university of the battery, so that a service life of the battery can be improved to some extent.

In some embodiments, the cell assembly includes a plurality of battery units arranged along a first direction. Each of the battery units includes a plurality of battery cells sequentially stacked along a second direction. At least a part of the second heat exchange segment correspondingly exchanges heat with a plurality of ones of the battery cells located at an outermost periphery of the cell assembly.

In the foregoing technical solution, arrangement of the battery cells is coordinated with extended arrangement of the first heat exchange flow channel, and at least the part of the second heat exchange segment is set to correspondingly exchange heat with the battery cell groups at the periphery, so that heat exchange efficiency of the battery cell groups at the periphery can be improved, thereby further balancing a temperature difference caused when heat dissipation of the battery cells at the periphery of the battery assembly is greater than heat dissipation of the inner battery cells.

In some embodiments, the heat exchange member further includes at least one second heat exchange flow channel. The second heat exchange flow channel and the first heat exchange flow channel are bent in a same plane. The second heat exchange flow channel is disposed in the first U-shaped region of the first heat exchange flow channel in a bent manner.

In the foregoing technical solution, the at least one first heat exchange flow channel and the at least one second heat exchange flow channel are disposed, and a relative position relationship between the first heat exchange flow channel and the second heat exchange flow channel is coordinated, so that arrangement of the heat exchange flow channels can be designed based on a cooling requirement of the battery, thereby further optimizing a temperature adjustment effect on the cell assembly, and improving the temperature university of the battery.

In some embodiments, the at least one second heat exchange flow channel is bent to form a second U-shaped region. At least a part of the first heat exchange segment is disposed in the second U-shaped region of the second heat exchange flow channel.

In the foregoing technical solution, the at least one second heat exchange flow channel is set to be bent to form the second U-shaped region, and at least the part of the first heat exchange segment is disposed in the second U-shaped region of the second heat exchange flow channel, to facilitate coordination and cooperation between the first heat exchange flow channel and the second heat exchange flow channel, thereby further improving the temperature university of the battery.

In some embodiments, the heat exchange member includes at least one heat exchange tube extending in a bent manner. A heat exchange flow channel is defined in each heat exchange tube. The heat exchange tube is of a flat-tube structure.

In the foregoing technical solution, the heat exchange member of the flat-tube structure occupies small space, to help improve the capacity of the battery, and reduce a weight, a volume, and costs of the battery.

According to a second aspect, an embodiment of the present application further provides a power consuming apparatus, including the battery in any one of the foregoing solutions.

In the foregoing technical solution, because performance of the battery is improved, it is beneficial to improve working power consuming performance of the power consuming apparatus.

### BRIEF DESCRIPTION OF THE DRAWINGS

To describe the technical solutions in embodiments of the present application more clearly, the accompanying drawings to be used in the embodiments will be briefly described below. It should be understood that these drawings merely show some of the embodiments of the present application, and should not be regarded as limiting the scope of the present application. For a person of ordinary skill in the art, other drawings may also be obtained based on these drawings without creative efforts.
FIG. 1 is a schematic diagram of a structure of a vehicle according to some embodiments of the present application;
FIG. 2 is an exploded view of a structure of a battery according to some embodiments of the present application;
FIG. 3 is a schematic diagram of a box-body assembly and a plug-in assembly according to Embodiment 1 of the present application;
FIG. 4 is a partial enlarged view of a part A circled in FIG. 3;
FIG. 5 is a diagram of assembly of the box-body assembly and the plug-in assembly shown in FIG. 3;
FIG. 6 is a partial enlarged view of a part B circled in FIG. 5;
FIG. 7 is a cross-sectional view of the box-body assembly and the plug-in assembly shown in FIG. 5;
FIG. 8 is a view of an orthographic projection of the box-body assembly and the plug-in assembly shown in FIG. 5;
FIG. 9 is a partial enlarged view of a part C circled in FIG. 8;
FIG. 10 is a diagram of assembly of a box-body assembly and a plug-in assembly according to Embodiment 2 of the present application;
FIG. 11 is an exploded view of the box-body assembly and the plug-in assembly shown in FIG. 10;
FIG. 12 is a cross-sectional view of the box-body assembly and the plug-in assembly shown in FIG. 10;
FIG. 13 is a view of an orthographic projection of the box-body assembly and the plug-in assembly shown in FIG. 10;
FIG. 14 is a diagram of assembly of a box-body assembly and a plug-in assembly according to Embodiment 3 of the present application;
FIG. 15 is an exploded view of the box-body assembly and the plug-in assembly shown in FIG. 14;
FIG. 16 is a cross-sectional view of the box-body assembly and the plug-in assembly shown in FIG. 14;
FIG. 17 is a view of an orthographic projection of the box-body assembly and the plug-in assembly shown in FIG. 14;
FIG. 18 is a partial cross-sectional view of a battery according to some embodiments of the present application;
FIG. 19 is an exploded view including a part of components of a battery according to some embodiments of the present application;
FIG. 20 is a diagram of assembly of a part of components of a battery according to some embodiments of the present application;
FIG. 21 is an exploded view including a part of components of a battery according to some embodiments of the present application;
FIG. 22 is an exploded view of a heat exchange member and the like according to some embodiments of the present application;
FIG. 23 is a partial cross-sectional view of a battery according to some embodiments of the present application;
FIG. 24 is a schematic diagram of cooperation between a heat exchange member and a cell assembly according to some embodiments of the present application;
FIG. 25 is a schematic diagram of a heat exchange member according to some embodiments of the present application; and
FIG. 26 is a schematic diagram of a heat exchange member according to some other embodiments of the present application.

Reference numerals: vehicle 1000; battery 100; controller 200; motor 300; box-body assembly 1; first direction X; second direction Y; third direction Z; box body 11; first wall 111; first penetration hole 1111; bottom wall 11a; enclosure wall 11b; second wall 112; first space 113; second space 114; box cover 12; expansion beam 13; first expansion beam 131; second expansion beam 132; bottom protection plate 14; first protection plate 141; second protection plate 142; foaming member 17; first foaming portion 171; second foaming portion 172; sealing member 18; peripheral portion 181; bottom adhesive layer 19; cell assembly 2; battery cell 21; battery unit 20; heat exchange member 31; first heat exchange flow channel 3110; first heat exchange segment 3111; second heat exchange segment 3112; third heat exchange segment 3113; first U-shaped region Z1; first segment R1; second segment R2; third segment R3; fourth segment R4; second heat exchange flow channel 3114; second U-shaped region Z2; heat exchange tube 312; current collector 32; connection tube 36; first sealing member 37; second sealing member 38; plug-in assembly 4; plug-in member 41; mounting portion 411; power connection portion 412; external power connection end 4121; internal power connection end 4122; adapter 42; support portion 421; second penetration hole 4211; groove 4212; end plate portion 4213; surrounding plate portion 4214; first surrounding plate segment 42141; second surrounding plate segment 42142; avoidance cavity 4215; through hole 4216; connection portion 422; oblique reinforcing rib 423; first sealing member 51; protruding portion 511; second sealing member 52; first connection member 61; first rod portion 611; first head portion 612; second connection member 62; second rod portion 621; second head portion 622; third connection member 63; third rod portion 631; third head portion 632; fourth connection member 64; fourth rod portion 641; fourth head portion 642; temperature adjustment member 7; first temperature adjustment member 71; second temperature adjustment member 72; and third temperature adjustment member 73.

### DETAILED DESCRIPTION

To make objects, technical solutions, and advantages of embodiments of the present application clearer, the technical solutions in the embodiments of the present application are clearly described below with reference to the accompanying drawings of the embodiments of the present application. It is clear that the described embodiments are a part of the embodiments of the present application, rather than all of the embodiments. All other embodiments obtained by a person of ordinary skill in the art based on the embodiments of the present application without creative efforts shall fall within the protection scope of the present application.

Unless otherwise defined, all technical and scientific terms used in the present application have the same meanings as commonly understood by those skilled in the technical field of the present application. In the present application, the terms used in the description of the present application are only for purposes of description of specific embodiments, and are not intended to limit the present application. The terms "including" and "having" in the description and claims of the present application and the above brief description of the accompanying drawings and any variations thereof are intended to cover non-exclusive inclusions. The terms "first", "second" and the like in the description and claims or the above brief description of the accompanying drawings of the present application are used to distinguish different objects, rather than to describe a specific order or primary and secondary relationship.

Reference to "an embodiment" in the present application means that a particular feature, structure or characteristic described in connection with the embodiment may be included in at least one embodiment of the present application. Appearances of the phrase in various locations in this specification are not necessarily all referring to a same embodiment, nor are separate or alternative embodiments mutually exclusive of another embodiment.

In the descriptions of the present application, it should be noted that, unless otherwise expressly specified and limited, the terms "mounted", "connected", "connection", and "attached" should be understood in a broad sense, for example, they may refer to a fixed connection, a detachable connection or an integral connection, which may be a direct connection, an indirect connection via an intermediate medium, or an internal communication between two elements. A person of ordinary skill in the art may understand specific meanings of the terms in the present application according to specific situations.

The term "and/or" in the present application describes only an association relationship for describing associated objects and represents that three relationships may exist. For example, A and/or B may represent the following three cases: Only A exists, both A and B exist, and only B exists. In addition, the character "/" in the present application generally indicates that the associated objects have an "or" relationship.

In the embodiments of the present application, the same reference numerals denote the same components, and for the sake of brevity, detailed descriptions of the same components are omitted in different examples. It should be understood dimensions, such as a thickness, a length, and a width, of each component in the embodiments of the present application shown in the accompanying drawings, as well as dimensions, such as an overall thickness, length, and width, of an integrated apparatus are only exemplary descriptions, and should not constitute any limitation to the present application.

"A plurality of" appearing in the present application means two or more (including two).

In the present application, battery cells may include a lithium-ion secondary battery, a lithium-ion primary battery, a lithium-sulfur battery, a sodium-lithium-ion battery, a sodium-ion battery, or a magnesium-ion battery, etc., which are not limited in the embodiments of the present application. The battery cells may be cylindrical, flat, rectangular, or in other shapes, which are also not limited in the embodiments of the present application. The battery cells are generally divided into three types according to encapsulation manners: cylindrical battery cells, rectangular battery cells, and pouch battery cells, which are also not limited in the embodiments of the present application.

A battery mentioned in the embodiments of the present application refers to a single physical module including one or more battery cells to provide a higher voltage and a higher capacity. The battery generally includes a box-body assembly configured to encapsulate one or more battery cells or one or more battery modules. The battery module generally includes a plurality of battery cells. The box-body assembly can improve charging or discharging of the battery cell that is affected by liquid or another foreign matter.

The battery cell includes a housing, an electrode assembly, and an electrolyte solution. The housing is configured to accommodate the electrode assembly and the electrolyte solution. One or more electrode assemblies are disposed in the housing. The electrode assembly may include a positive electrode plate, a negative electrode plate, and a separator. The electrode assembly may be of a winding structure or a laminated structure. The battery cell works mainly relying on movement of metal ions between the positive electrode plate and the negative electrode plate.

The positive electrode plate may generally include a positive electrode current collector and a positive electrode active material layer. The positive electrode active material layer is directly or indirectly coated on the positive electrode current collector. The positive electrode current collector not coated with the positive electrode active material layer protrudes out of the positive electrode current collector already coated with the positive electrode active material layer, and the positive electrode current collector not coated with the positive electrode active material layer serves as a positive electrode tab. Using a lithium-ion battery as an example, a material of a positive electrode current collector may be aluminum, and a material of a positive electrode active material layer may be lithium cobalt oxide, lithium iron phosphate, ternary aluminum, lithium manganese oxide, or the like.

The negative electrode plate may generally include a negative electrode current collector and a negative electrode active material layer. The negative electrode active material layer is directly or indirectly coated on the negative electrode current collector. The negative electrode current collector not coated with the negative electrode active material layer protrudes out of the negative electrode current collector already coated with the negative electrode active material layer, and the negative electrode current collector not coated with the negative electrode active material layer serves as a negative electrode tab. A material of the negative electrode current collector may be copper, and a material of the negative electrode active material layer may be carbon or silicon.

To ensure that no fusing occurs when a large current passed through, a quantity of positive electrode tabs is multiple and these positive electrode tabs are stacked to form a positive electrode tab portion, and a quantity of negative electrode tabs is multiple and these negative electrode tabs are stacked to form a negative electrode tab portion. A terminal post is disposed on the housing. The positive electrode tab portion is electrically connected to a positive electrode terminal post, and the negative electrode tab portion is electrically connected to a negative electrode terminal post. The tab portion may be directly connected to the terminal post, or may be indirectly connected to the terminal post by using an adapter sheet.

A material of the separator is not limited, and may be, for example, polypropylene or polyethylene.

When a battery in the related technology is used in a power consuming apparatus, a battery mounting position and a mutual-plugging structure are disposed on the power consuming apparatus. The battery is mounted at the battery mounting position, and the battery has a plug-in member that is in plug-in cooperation with the mutual-plugging structure, to implement electrical conduction. However, relative positions between battery mounting positions and mutual-plugging structures on different power consuming apparatuses are different, and different box-body assemblies or plug-in members need to be separately disposed for the different power consuming apparatuses, causing poor universality and high production costs.

Therefore, the embodiments of the present application provide a battery in which an adapter is disposed between a box-body assembly and a plug-in member. For the case in which the relative positions between the battery mounting positions and the mutual-plugging structures on the different power consuming apparatuses are different, adapters of different sizes may be selected to change a relative position between the plug-in member and the box-body assembly, so that the battery can be mounted at the battery mounting position and the plug-in member may be docked to the mutual-plugging structure when structures of the box-body assembly and the plug-in member are not changed, to adapt to a plurality of cases in which the relative positions between the battery mounting positions and the mutual-plugging structures are different, thereby improving an applicable range of the battery and reducing production costs.

The embodiments of the present application provide a power consuming apparatus using a battery as a power source. The power consuming apparatus may be, but is not limited to, a mobile phone, a tablet, a notebook computer, an electric toy, an electric tool, an electric scooter, an electric vehicle, a ship, a spacecraft, or the like. The electric toy may be a stationary or mobile electric toy, for example, a game console, an electric vehicle toy, an electric ship toy, or an electric aircraft toy. The spacecraft may include an airplane, a rocket, a space shuttle, a spaceship, and the like.

For ease of description, the following embodiments are described by using an example in which a power consuming apparatus of an embodiment of the present application is a vehicle.

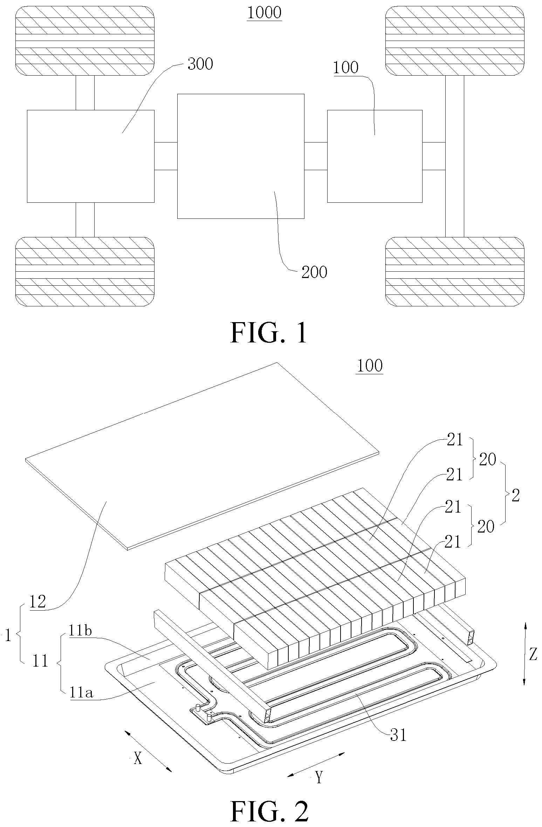

FIG. 1 is a schematic diagram of a structure of a vehicle 1000 according to some embodiments of the present application. The vehicle 1000 may be a fuel powered vehicle, a gas powered vehicle, or a new energy vehicle. The new energy vehicle may be a pure electric vehicle, a hybrid electric vehicle, an extended-range electric vehicle, or the like. A battery 100 is disposed inside the vehicle 1000, and the battery 100 may be disposed at the bottom, head, or tail of the vehicle 1000. The battery 100 may be configured to supply power to the vehicle 1000. For example, the battery 100 may serve as an operating power source of the vehicle 1000. The vehicle 1000 may further include a controller 200 and a motor 300. The controller 200 is configured to control the battery 100 to supply power to the motor 300, for example, to satisfy a work power demand when the vehicle 1000 is started, navigated, and driven.

In some embodiments of the present application, the battery 100 can not only serve as the operating power source of vehicle 1000, but also as a driving power source of vehicle 1000, thereby replacing or partially replacing fuel or natural gas to supply driving power to the vehicle 1000.

FIG. 2 is an exploded view of a structure of a battery 100 according to some embodiments of the present application. The battery 100 includes a box-body assembly 1 and a cell assembly 2. The cell assembly 2 is disposed inside the box-body assembly 1. The cell assembly 2 includes a plurality of battery cells 21, and the plurality of battery cells 21 may be connected in series, in parallel, or in a series-parallel manner. The series-parallel manner means that both series connection and parallel connection exist in the plurality of battery cells 21. The plurality of battery cells 21 may be directly connected in series, in parallel, or in the series-parallel manner, and an entirety including the plurality of battery cells 21 is accommodated in the box-body assembly 1. Certainly, the plurality of battery cells 21 may first be connected in series, in parallel, or in the series-parallel manner to form a battery module, and then a plurality of battery modules are connected in series, in parallel, or in the series-parallel manner to form an entirety and be accommodated in the box-body assembly 1.

The battery 100 may further include another structure. For example, the battery 100 may further include a temperature adjustment member 7. The temperature adjustment member 7 is configured to exchange heat with the cell assembly 2, to adjust a temperature of the cell assembly 2, thereby improving work reliability of the battery 100. For another example, the battery 100 may further include a bus component. The bus component is configured to implement electrical connection between the plurality of battery cells 21. Each of the battery cells 21 may be a secondary battery or a primary battery, or may be a lithium-sulfur battery, a sodium-ion battery, or a magnesium-ion battery, but is not limited thereto. The battery cells 21 may be cylindrical, flat, rectangular, or the like.

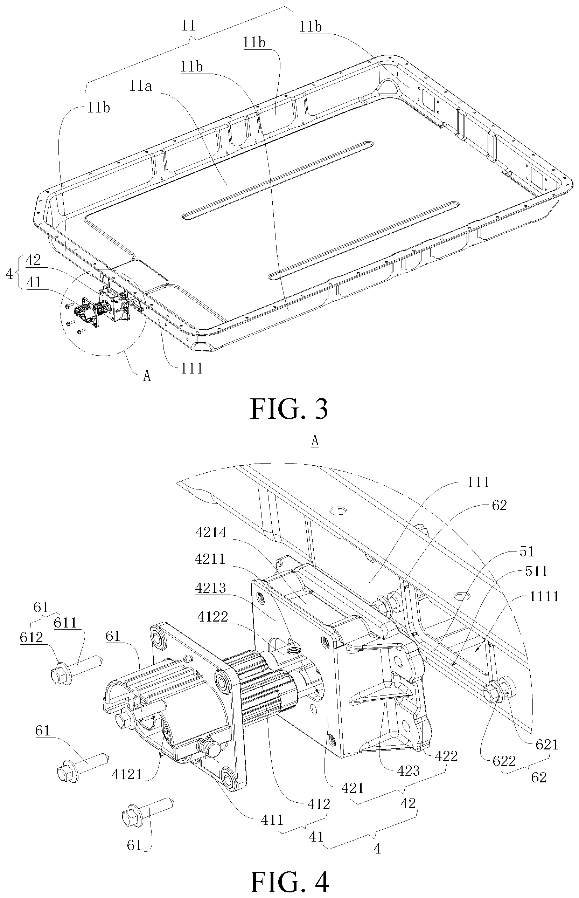

As shown in FIG. 3 and FIG. 4, the box-body assembly 1 includes a first wall 111, and the first wall 111 is provided with a first penetration hole 1111. In this embodiment of the present application, a shape and composition of the box-body assembly 1 are not limited. For example, the box-body assembly 1 may include a box body 11 and a box cover 12 covering the box body 11. The box body 11 may be in a shape with an open top, a shape with an open bottom, or the like. For example, the box body 11 may be a sheet metal part that is integrally stamped and formed, or an assembly formed by splicing a plurality of sheet metals. A wall of the box-body assembly 1 that serves as the first wall 111 is not limited, and may be determined based on a specific shape and a specific actual situation of the box-body assembly 1, for example, may be a side surface wall, a top wall, or a bottom wall of the box-body assembly 1.

As shown in FIG. 4 to FIG. 6, the battery 100 further includes a plug-in assembly 4. The plug-in assembly 4 is mounted to the box-body assembly 1. The plug-in assembly 4 includes a plug-in member 41. The plug-in member 41 includes a mounting portion 411 and a power connection portion 412. The mounting portion 411 is located on an outer side of the first wall 111 (to be specific, a side of the first wall 111 away from an interior of the box-body assembly 1, where a side of the first wall 111 close to the interior of the box-body assembly 1 is an inner side of the first wall 111). The power connection portion 412 includes an external power connection end 4121 located on a side of the mounting portion 411 away from the first wall 111 and an internal power connection end 4122 located on a side of the mounting portion 411 close to the interior of the box-body assembly 1. The internal power connection end 4122 is disposed corresponding to the first penetration hole 1111. In this embodiment of the present application, a function of the plug-in member 41 may be to implement electrical connection between the battery 100 and a power consuming apparatus. The internal power connection end 4122 of the power connection portion 412 extends into the box-body assembly 1 through the first penetration hole 1111 or is exposed at the first penetration hole 1111, so that the cell assembly 2 in the box-body assembly 1 can be electrically connected to the internal power connection end 4122. The external power connection end 4121 of the power connection portion 412 is located outside the box-body assembly 1 and is configured to be plugged to a mutual-plugging structure of the power consuming apparatus. For example, the external power connection end 4121 may serve as a socket of a high-voltage connector of the battery 100 to be plugged to the mutual-plugging structure (for example, a plug) of the power consuming apparatus.

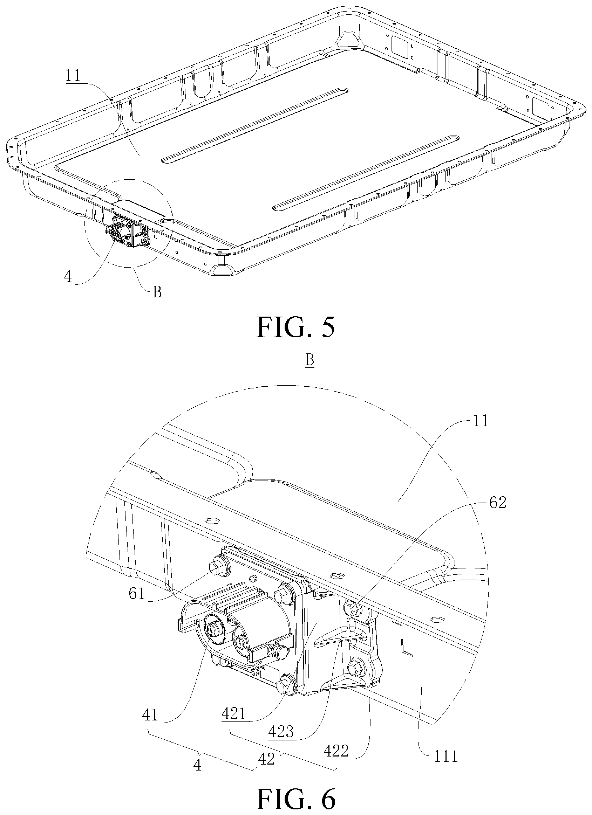

As shown in FIG. 4 and FIG. 6, at least a part of an adapter 42 is located outside the box-body assembly 1 and supports the mounting portion 411, to space the mounting portion 411 from the first wall 111. In other words, the adapter 42 is disposed, so that a spacing exists between the mounting portion 411 and the first wall 111 under support of the adapter 42, and the mounting portion 411 is not tightly attached to the first wall 111. Space between the mounting portion 411 and the first wall 111 may be vacant, or may be filled by the adapter 42. This is not limited herein. The mounting portion 411 and the first wall 111 are arranged spaced away provided that the spacing exists between the mounting portion 411 and the first wall 111. A relative position between the adapter 42 and the box-body assembly 1 is not limited. For example, only a part of the adapter 42 may be located outside the box-body assembly 1, or all of the adapter 42 may be located outside the box-body assembly 1, provided that the adapter 42 can support the mounting portion 411, so that the spacing exists between the mounting portion 411 and the first wall 111, and a position at which the external power connection end 4121 protrudes relative to the first wall 111 satisfies a requirement for plugging to the mutual-plugging structure.

In this way, according to this embodiment of the present application, the adapter 42 is disposed at a position at which the box-body assembly 1 is connected to the plug-in member 41, so that a relative position between the plug-in member 41 and the box-body assembly 1 can be changed based on different sizes of the adapter 42. Therefore, for different power consuming apparatuses, a size of the box-body assembly 1 does not need to be differentially designed, and a size of the plug-in member 41 does not need to be differentially designed. Only an adapter 42 with a suitable size needs to be selected based on actual conditions (for example, relative positions between battery mounting positions and mutual-plugging structures on the power consuming apparatuses) of the different power consuming apparatuses, to space the plug-in member 41 from the box-body assembly 1 by a suitable spacing, so that a position at which the plug-in member 41 protrudes relative to the box-body assembly 1 can achieve a balance between a requirement for mounting the battery 100 at the battery mounting position and a requirement for plugging between the plug-in member 41 and the mutual-plugging structure on the power consuming apparatus, thereby satisfying applicability of the battery 100 to the different power consuming apparatuses, implementing universality of the box-body assembly 1 and the plug-in member 41, and reducing production costs.

In a battery in the related technology, a plug-in member is directly mounted to a box body, and a position at which the plug-in member protrudes relative to the box body is fixed. When a relative position between a battery mounting position and a mutual-plugging structure on a power consuming apparatus changes, the plug-in member mutually plugged to the mutual-plugging structure cannot be mounted to the box body, or the plug-in member mounted to the box body cannot be close to the mutual-plugging structure on the power consuming apparatus, and consequently, mutual plugging cannot be implemented. Therefore, only a size of the box body or a size of the plug-in member can be changed, so that the position at which the plug-in member on the battery mounted at the battery mounting position protrudes relative to the box body satisfies a requirement for plugging between the plug-in member and the mutual-plugging structure. The box body and the plug-in member cannot satisfy a requirement for universality, and production costs need to be increased.

However, in the battery 100 in this embodiment of the present application, the adapter 42 is disposed at the position at which the box-body assembly 1 is connected to the plug-in member 41, and a position of the plug-in member 41 relative to the box-body assembly 1 is adjustable by using the adapter 42, so that the position at which the plug-in member 41 protrudes relative to the box-body assembly 1 can satisfy a requirement for plugging between the plug-in member 41 and mutual-plugging structures on different power consuming apparatuses, and the battery 100 is applicable to the different power consuming apparatuses,.

In some embodiments of the present application, as shown in FIG. 4, FIG. 6, and FIG. 7, the adapter 42 includes a support portion 421, and the support portion 421 is disposed between the first wall 111 and the mounting portion 411 to support the mounting portion 411. In this way, because the adapter 42 includes the support portion 421 disposed between the first wall 111 and the mounting portion 411, and the support portion 421 is disposed corresponding to the mounting portion 411, the support portion 421 supports the plug-in member 41 more reliably and stably, so that the plug-in member 41 can be electrically connected to a mutual-plugging structure of a power consuming apparatus stably, thereby improving stability and reliability of supplying power to the power consuming apparatus by the battery 100. In addition, cooperation between the adapter 42 and the plug-in member 41 is compact, to help reduce overall space occupation of the plug-in assembly 4.

In some embodiments of the present application, as shown in FIG. 4, FIG. 6, and FIG. 7, the support portion 421 is disposed surrounding the first penetration hole 1111. A second penetration hole 4211 corresponding to the first penetration hole 1111 is provided on the support portion 421. The power connection portion 412 is inserted into the second penetration hole 4211. In this way, the support portion 421 helps support the mounting portion 411 in a larger range, so that stability of supporting the plug-in member 41 is further improved. Therefore, the plug-in member 41 can be electrically connected to a mutual-plugging structure of a power consuming apparatus stably, thereby improving stability and reliability of supplying power to the power consuming apparatus by the battery 100. In addition, a form and a disposition position of the adapter 42 help improve sealing performance of the box-body assembly 1 at a mounting position of the plug-in member 41, thereby improving reliability of the battery 100. In addition, the support portion 421 can further shield the power connection portion 412, to improve a risk such as short circuiting or electric leakage of the power connection portion 412, thereby improving the reliability of the battery 100.

Certainly, the present application is not limited thereto. For example, in another embodiment of the present application, the support portion 421 may not be disposed surrounding the first penetration hole 1111. For example, the support portion 421 may alternatively be a plurality of support posts or the like disposed surrounding the power connection portion 412 at intervals.

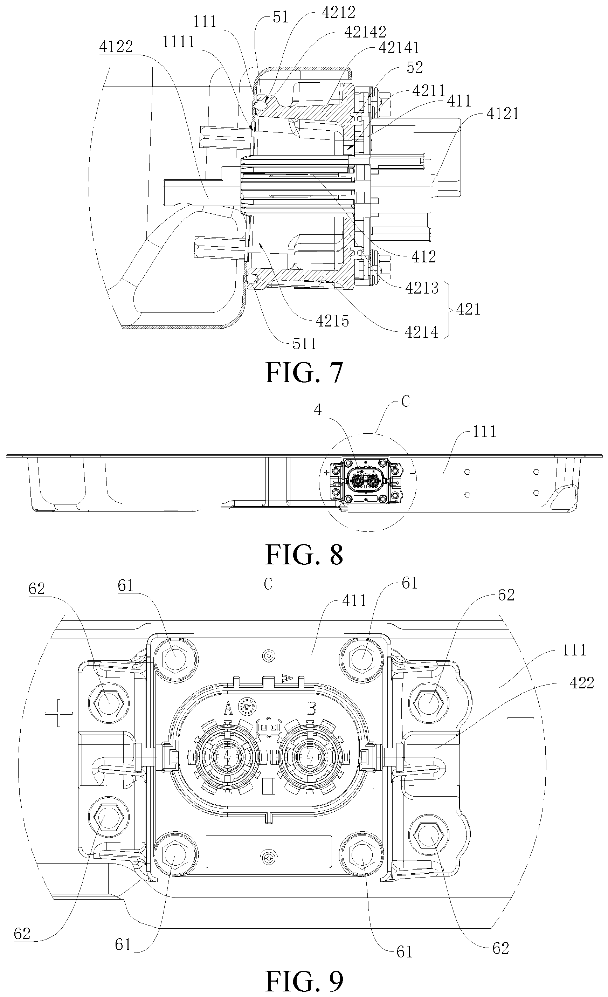

In some embodiments of the present application, as shown in FIG. 4 and FIG. 7, a first sealing member 51 is disposed between the support portion 421 and the first wall 111. The first sealing member 51 is disposed surrounding the first penetration hole 1111. In this way, the first sealing member 51 is disposed, so that sealing performance at a position at which the adapter 42 cooperates with the box-body assembly 1 can be improved, to help improve the sealing performance of the box-body assembly 1 at the mounting position of the plug-in member 41, thereby improving the reliability of the battery 100. In addition, a manner of disposing the first sealing member 51 between the adapter 42 and the first wall 111 is simple and easy to implement, thereby reducing sealing difficulty and improving a sealing effect.

For example, as shown in FIG. 4 and FIG. 7, an end surface of the support portion 421 facing the first wall 111 has an annular groove 4212, and the first sealing member 51 is embedded in the groove 4212. In this way, the first sealing member 51 is embedded in the groove 4212, so that mounting stability of the first sealing member 51 can be improved, and sealing reliability at a position at which the first wall 111 cooperates with the adapter 42 can be improved. In addition, the groove 4212 is processed on the adapter 42 instead of on the first wall 111l, so that processing difficulty and production costs of the box-body assembly 1 can be reduced. In addition, the groove 4212 is processed on the adapter 42, to help improve a depth of the groove 4212, so as to improve stability of cooperation between the first sealing member 51 and the groove 4212, thereby improving sealing reliability of the first sealing member 51.

For example, as shown in FIG. 4 and FIG. 7, an inner ring surface and an outer ring surface of the first sealing member 51 respectively have a plurality of protruding portions 511 arranged at intervals along a peripheral direction. The first sealing member 51 is in interference fit with the groove 4212 by using the protruding portions 511. To be specific, the plurality of protruding portions 511 on the inner ring surface of the first sealing member 51 are in interference fit with an inner torus of the groove 4212, and the plurality of protruding portions 511 on the outer ring surface of the first sealing member 51 are in interference fit with an outer torus of the groove 4212. In this way, reliability of the cooperation between the first sealing member 51 and the groove 4212 can be improved, thereby further improving the sealing reliability of the first sealing member 51.

In some embodiments of the present application, as shown in FIG. 7, a second sealing member 52 is disposed between the support portion 421 and the mounting portion 411. The second sealing member 52 is disposed surrounding the second penetration hole 4211. In this way, the second sealing member 52 is disposed, so that sealing performance at a position at which the adapter 42 cooperates with the plug-in member 41 can be improved, to help improve the sealing performance of the box-body assembly 1 at the mounting position of the plug-in member 41, thereby improving the reliability of the battery 100. In addition, a manner of disposing the second sealing member 52 between the adapter 42 and the mounting portion 411 is simple and easy to implement, thereby reducing sealing difficulty and improving a sealing effect.

For example, an annular countersink may be provided on at least one of the adapter 42 and the mounting portion 411, and the second sealing member 52 may be embedded in the countersink, to improve mounting stability of the second sealing member 52 and improve sealing reliability at a position at which the adapter 42 cooperates with the mounting portion 411.

In some embodiments of the present application, as shown in FIG. 4 and FIG. 7, the support portion 421 includes an end plate portion 4213 and a surrounding plate portion 4214. The surrounding plate portion 4214 is disposed surrounding the first penetration hole 1111. The end plate portion 4213 is connected to an end of the surrounding plate portion 4214 away from the first wall 111. The mounting portion 411 is supported on a side of the end plate portion 4213 away from the first wall 111. The second penetration hole 4211 extends through the end plate portion 4213. An avoidance cavity 4215 having an opening facing the first wall 111 is formed between the end plate portion 4213 and the surrounding plate portion 4214. The avoidance cavity 4215 communicates with the first penetration hole 1111 and the second penetration hole 4211. A cross-sectional area of the avoidance cavity 4215 is larger than a cross-sectional area of the second penetration hole 4211. A cross section of the avoidance cavity 4215 and a cross section of the second penetration hole 4211 are both sectioned by a plane perpendicular to an axis of the first penetration hole 1111. In this way, the adapter 42 may be formed into a cover form, instead of a solid block, so that a weight and costs can be reduced.

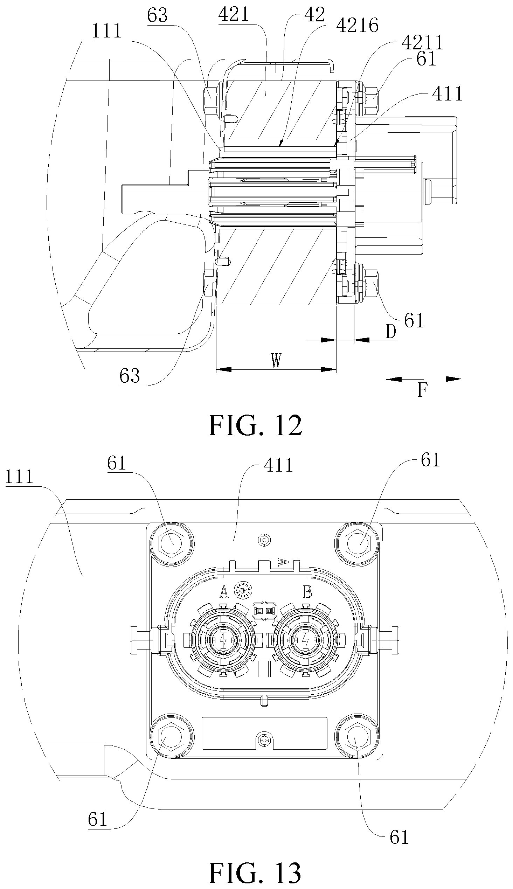

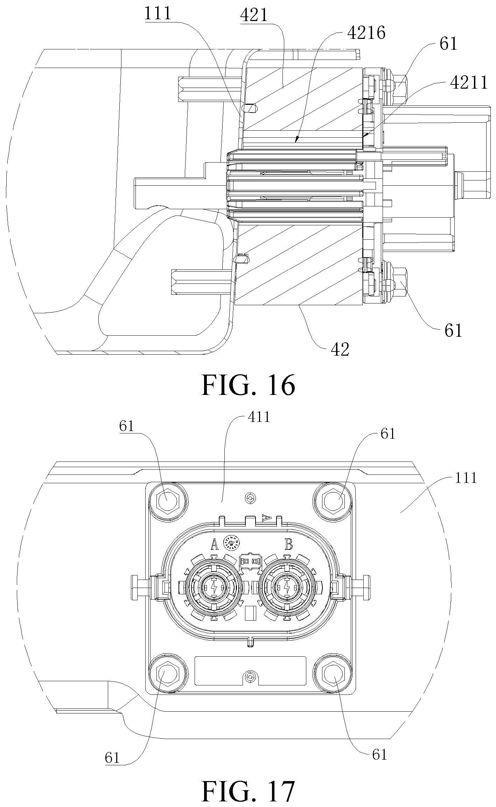

Certainly, the present application is not limited thereto. In another embodiment of the present application, the adapter 42 may alternatively be provided in a form of a solid block, and a through hole 4216 is provided on the adapter 42. Refer to FIG. 12 and FIG. 16, a hole opening formed by the through hole 4216 on a surface of a side of the adapter 42 away from the first wall 111 forms the second penetration hole 4211, thereby simplifying a structure of the adapter 42, facilitating processing of the adapter 42, and improving supporting strength of the adapter 42.

In some embodiments of the present application, as shown in FIG. 4 and FIG. 7, the surrounding plate portion 4214 includes a first surrounding plate segment 42141 and a second surrounding plate segment 42142 that are sequentially arranged in a direction from the end plate portion 4213 to the first wall 111. A wall thickness of the first surrounding plate segment 42141 gradually decreases in the direction from the end plate portion 4213 to the first wall 111. A wall thickness of the second surrounding plate segment 42142 is greater than a wall thickness of an end portion of the first surrounding plate segment 42141 close to the first wall 111.

In this way, the first surrounding plate portion 4214 is gradually thickened toward a direction close to the end plate portion 4213, so that connection strength between the surrounding plate portion 4214 and the end plate portion 4213 can be improved, and stability of supporting the end plate portion 4213 by the surrounding plate portion 4214 can be improved. The wall thickness of the second surrounding plate segment 42142 is set to be greater than the wall thickness of the end portion of the first surrounding plate segment 42141 close to the first wall 111, so that stability that the surrounding plate portion 4214 is supported on the first wall 111 can be improved, thereby improving stability of supporting the plug-in member 41 by the adapter 42. Therefore, the plug-in member 41 can be electrically connected to the mutual-plugging structure of the power consuming apparatus stably, thereby improving the stability and reliability of supplying power to the power consuming apparatus by the battery 100. In addition, when the groove 4212 used for embedding the first sealing member 51 is formed on the surrounding plate portion 4214, the wall thickness of the second surrounding plate segment 42142 is set to be large, to help increase a groove width of the groove 4212 and increase a thickness of the first sealing member 51, thereby helping improve sealing performance of cooperation between the adapter 42 and the box-body assembly 1.

In some embodiments of the present application, as shown in FIG. 4 and FIG. 6, the adapter 42 is entirely located on the outer side of the first wall 111 (that is, a side away from the interior of the box-body assembly 1). In this way, the adapter 42 is entirely disposed outside the box-body assembly 1, so that mounting, replacement, and the like of the adapter 42 can be directly performed on an outer side of the box-body assembly 1, thereby facilitating mounting and dismounting of the adapter 42. In addition, the adapter 42 does not occupy space in the box-body assembly 1, to help ensure a capacity of the battery 100.

For example, as shown in FIG. 4 and FIG. 6, the adapter 42 includes the support portion 421 and a connection portion 422. The support portion 421 is disposed between the mounting portion 411 and the first wall 111. The connection portion 422 is located at a periphery of the support portion 421 and is configured to be connected to the first wall 111. When the adapter 42 is entirely located on the outer side of the first wall 111, the support portion 421 and the connection portion 422 are both located on the outer side of the first wall 111.

In this embodiment of the present application, a connection relationship and a mounting sequence of the adapter 42, the box-body assembly 1, and the plug-in member 41 are not limited. For example, the adapter 42 may be first mounted on the box-body assembly 1, and then the plug-in member 41 is mounted on the adapter 42. For another example, the adapter 42 may be first mounted on the plug-in member 41, and then the plug-in member 41 is mounted on the box-body assembly 1. For still another example, the adapter 42 and the plug-in member 41 may be separately mounted on the box-body assembly 1, and so on.

In some embodiments of the present application, as shown in FIG. 4 and FIG. 7, the plug-in member 41 is connected to the adapter 42, and the adapter 42 is connected to the first wall 111. In this way, it is beneficial to improve connection reliability between the plug-in member 41 and the adapter 42, and it is beneficial to improve connection reliability between the adapter 42 and the first wall 111, thereby improving reliability that the plug-in assembly 4 is mounted to the box-body assembly 1. Connection between the plug-in member 41 and the adapter 42 may be detachable connection such as threaded connection, or may be non-detachable connection such as riveting. Connection between the adapter 42 and the first wall 111 may be detachable connection such as threaded connection, or may be non-detachable connection such as riveting. When the detachable connection is selected, it is convenient to replace the adapter 42. When the non-detachable connection is selected, it is convenient to improve sealing performance and reliability of the connection.

For example, an assembly operation between the plug-in member 41 and the adapter 42 is not affected by a state of whether the adapter 42 is connected to the first wall 111. To be specific, regardless of whether the adapter 42 is connected to or split from the first wall 111, an assembly step of the plug-in member 41 and the adapter 42 can be performed, so that a mounting sequence is flexible. For example, the plug-in member 41 may be first connected to the adapter 42 to form an assembly, and then the assembly is mounted to the box-body assembly 1. For another example, the adapter 42 may be first mounted to the first wall 111, and then the plug-in member 41 is mounted to the adapter 42, thereby helping improve assembly flexibility.

For example, when the plug-in member 41 is connected to the adapter 42, and the adapter 42 is connected to the first wall 111, the adapter 42 may be completely located outside the box-body assembly 1, to further facilitate assembly of the adapter 42 and the first wall 111. However, the present application is not limited thereto. In some other specific examples of this embodiment, when the plug-in member 41 is connected to the adapter 42, and the adapter 42 is connected to the first wall 111, the adapter 42 may alternatively extend into the box-body assembly 1 partially. For example, the adapter 42 may partially extend into the box-body assembly 1 through the first penetration hole 1111, to improve design flexibility.

In some embodiments of the present application, as shown in FIG. 4, FIG. 6, and FIG. 7, the adapter 42 includes the support portion 421. The support portion 421 is disposed between the first wall 111 and the mounting portion 411 to support the mounting portion 411. The mounting portion 411 is connected to the support portion 421.

In this way, because the adapter 42 includes the support portion 421 disposed between the first wall 111 and the mounting portion 411, and the support portion 421 is disposed corresponding to the mounting portion 411, the support portion 421 supports the plug-in member 41 more reliably and stably. In addition, the plug-in member 41 is connected at a position at which the adapter 42 supports the plug-in member 41, so that difficulty in connecting the adapter 42 to the plug-in member 41 can be reduced, and a structural design is simplified.

For example, the mounting portion 411 is connected to the support portion 421 by a first connection member 61. The first connection member 61 includes a first rod portion 611 and a first head portion 612. The first head portion 612 abuts against a side of the mounting portion 411 away from the support portion 421. The first rod portion 611 extends through the mounting portion 411 and is connected to the support portion 421.

For example, the first connection member 61 may be a threaded fastener or a rivet, and extends into the mounting portion 411 and the support portion 421 along a direction from the outer side of the first wall 111 to the inner side of the first wall 111, so that the mounting portion 411 can be connected to the support portion 421. For example, when the first connection member 61 is a threaded fastener (such as a screw a bolt), a threaded hole, an embedded nut, an external nut, or the like may be provided on the support portion 421 for connection. When the first connection member 61 is a rivet, the mounting portion 411 may be connected to the support portion 421 in a manner such as blind riveting.

In this way, the plug-in member 41 and the adapter 42 may be assembled on an outer side, thereby improving assembly convenience. In addition, the adapter 42 and the plug-in member 41 may be first mounted before the adapter 42 is connected to the first wall 111, or the adapter 42 and the plug-in member 41 may be subsequently mounted after the adapter 42 is connected to the first wall 111, so that assembly steps are flexible.

In some embodiments of the present application, as shown in FIG. 4, FIG. 6, FIG. 8, and FIG. 9, the adapter 42 further includes the connection portion 422. The connection portion 422 is located at the periphery of the support portion 421 and extends beyond a coverage area of the mounting portion 411. The connection portion 422 is connected to the first wall 111.

In this way, because the adapter 42 further includes the connection portion 422 located at the periphery of the support portion 421, and the connection portion 422 extends beyond the coverage area of the mounting portion 411, a position at which the connection portion 422 is connected to the first wall 111 may be staggered from a position at which the support portion 421 is connected to the mounting portion 411, so that connection between the connection portion 422 and the first wall 111 does not affect support of the support portion 421 to the mounting portion 411 and connection between the support portion 421 and the mounting portion 411. Therefore, there is no sequential requirement on a step of connecting the mounting portion 411 to the support portion 421 and a step of connecting the connection portion 422 to the first wall 111, and a sequence may be selected based on an actual requirement. For example, the mounting portion 411 may be first connected to the support portion 421, and then the first wall 111 is connected to the connection portion 422. Alternatively, the first wall 111 may be first connected to the connection portion 422, and then the mounting portion 411 is connected to the support portion 421. Therefore, assembly is flexible.

For example, as shown in FIG. 4, FIG. 6, and FIG. 9, the connection portion 422 is connected to the first wall 111 by a second connection member 62. The second connection member 62 includes a second rod portion 621 and a second head portion 622. The second head portion 622 abuts against a side of the connection portion 422 away from the first wall 111. The second rod portion 621 extends through the connection portion 422 and is connected to the first wall 111.

For example, the second connection member 62 may be a threaded fastener or a rivet, and extends into the connection portion 422 and the first wall 111 along the direction from the outer side of the first wall 111 to the inner side of the first wall 111, so that the connection portion 422 can be connected to the first wall 111. For example, when the second connection member 62 is a threaded fastener (such as a screw a bolt), a threaded hole, an embedded nut, an external nut, or the like may be provided on the first wall 111 for connection. When the second connection member 62 is a rivet, the connection portion 422 may be connected to the first wall 111 in a manner such as blind riveting.

In this way, the adapter 42 and the box-body assembly 1 may be assembled on an outer side, thereby improving assembly convenience. In addition, the adapter 42 and the box-body assembly 1 may be first mounted before the adapter 42 and the plug-in member 41, or the adapter 42 and the box-body assembly 1 may be subsequently mounted after the adapter 42 is connected to the plug-in member 41, so that assembly steps are flexible.

In some embodiments of the present application, as shown in FIG. 4 and FIG. 6, the adapter 42 further includes an oblique reinforcing rib 423 connected between the support portion 421 and the connection portion 422. In this way, structural strength of the adapter 42 can be improved, so that not only the connection reliability between the adapter 42 and the first wall 111, but also reliability of supporting the plug-in member 41 by the adapter 42, can be improved.

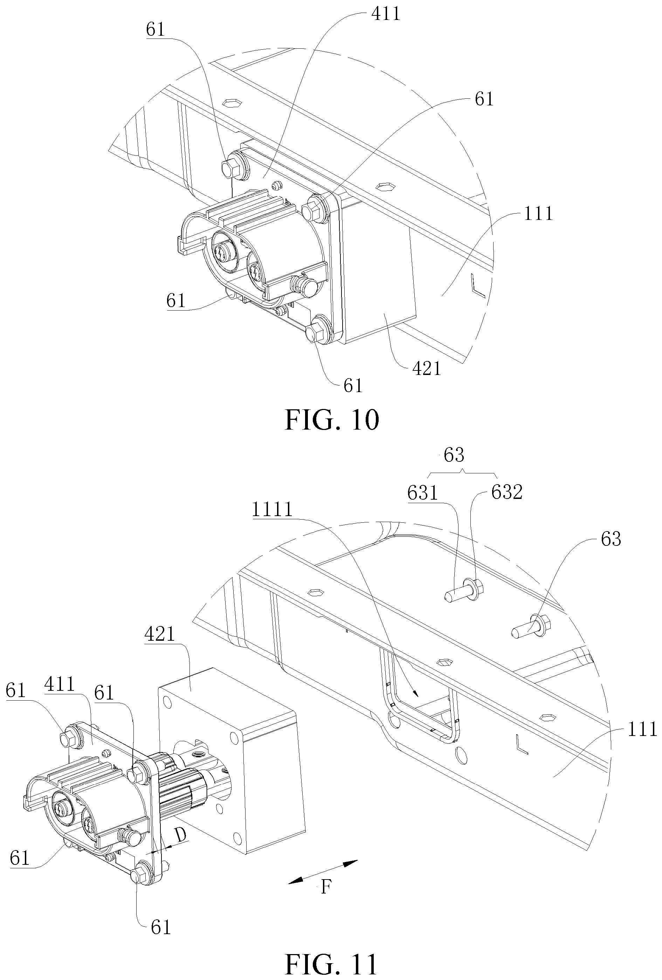

Certainly, the present application is not limited thereto. When the adapter 42 does not include the connection portion 422 located around the support portion 421, the adapter 42 can also be connected to the box-body assembly 1. For example, in some other embodiments of the present application, as shown in FIG. 10 to FIG. 13, the support portion 421 is connected to the first wall 111 by a third connection member 63. The third connection member 63 includes a third rod portion 631 and a third head portion 632. The third head portion 632 abuts against an inner side of the first wall 111. The third rod portion 631 extends through the first wall 111 and is connected to the support portion 421.

For example, the third connection member 63 may be a threaded fastener or a rivet, and extends into the first wall 111 and the support portion 421 along a direction from the inner side of the first wall 111 to the outer side of the first wall 111, so that the support portion 421 can be connected to the first wall 111. For example, when the third connection member 63 is a threaded fastener (such as a screw a bolt), a threaded hole, an embedded nut, an external nut, or the like may be provided on the support portion 421 for connection. When the third connection member 63 is a rivet, the support portion 421 may be connected to the first wall 111 in a manner such as blind riveting.

In this way, the adapter 42 and the box-body assembly 1 may be assembled on the inner side, and no connection portion 422 located around the support portion 421 needs to be disposed on the adapter 42, so that a volume and occupied space of the adapter 42 can be reduced. In addition, when the mounting portion 411 is connected to the support portion 421 by the first connection member 61, the adapter 42 and the box-body assembly 1 may be first mounted before the adapter 42 and the plug-in member 41, or the adapter 42 and the box-body assembly 1 may be subsequently mounted after the adapter 42 is connected to the plug-in member 41, so that the assembly steps are flexible. In addition, when the adapter 42 is connected to the first wall 111, only the adapter 42 and the first wall 111 need to be aligned, and when the adapter 42 is connected to the plug-in member 41, only the adapter 42 and the plug-in member 41 need to be aligned, so that assembly difficulty can be reduced, and assembly efficiency can be further improved.

For example, when the mounting portion 411 is connected to the support portion 421, and the support portion 421 is connected to the first wall 111 by the third connection member 63, the position at which the support portion 421 is connected to the mounting portion 411 is staggered from a position at which the support portion 421 is connected to the first wall 111. For example, the first connection member 61 is not directly opposite to the third connection member 63.

In this way, when a wall thickness of the support portion 421 is small, the foregoing two connection positions are set to be staggered, so that connection requirements can be satisfied by using wall thicknesses at different positions of the support portion 421 respectively. Certainly, if the wall thickness of the support portion 421 is sufficient, the foregoing two connection positions may alternatively be set to correspond to each other, or the foregoing two connection positions may be set to be staggered, thereby implementing flexible design.

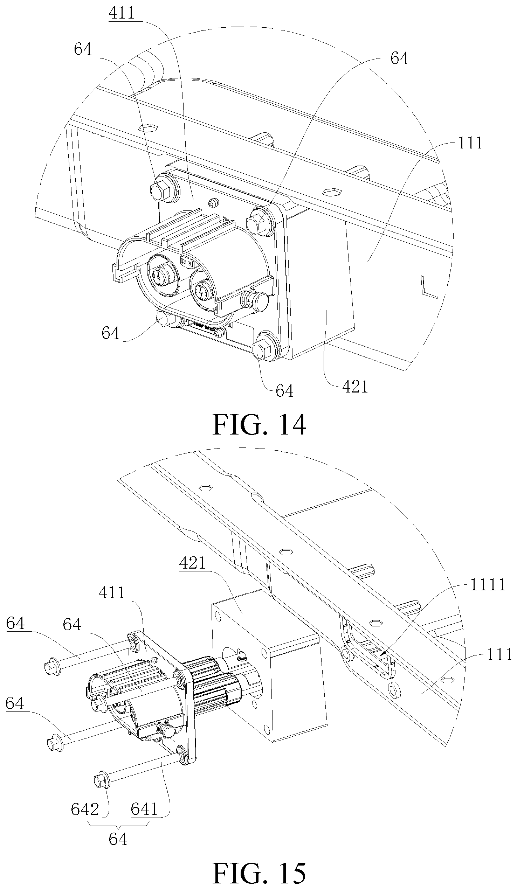

In addition, in the present application, the adapter 42 is not limited to being separately connected to the plug-in member 41 and the first wall 111. For example, in some other embodiments of the present application, as shown in FIG. 14 to FIG. 17, the plug-in member 41, the adapter 42, and the first wall 111 may alternatively be connected together by a fourth connection member 64. In other words, the fourth connection member 64 is connected to the plug-in member 41, the adapter 42, and the first wall 111. In this way, no connection portion 422 located around the support portion 421 needs to be disposed on the adapter 42, so that the volume and the occupied space of the adapter 42 can be reduced, and a quantity of used connection members can be reduced, thereby reducing costs.

For example, as shown in FIG. 14 to FIG. 17, the fourth connection member 64 includes a fourth rod portion 641 and a fourth head portion 642. The fourth head portion 642 abuts against a side of the mounting portion 411 away from the adapter 42. The fourth rod portion 641 extends through the mounting portion 411 and the adapter 42 and is connected to the first wall 111.

For example, the fourth connection member 64 may be a threaded fastener or a rivet, and extends into the mounting portion 411, the support portion 421, and the first wall 111 along the direction from the outer side of the first wall 111 to the inner side of the first wall 111, so that the plug-in member 41, the adapter 42, and the first wall 111 can be connected. In this way, the plug-in assembly 4 and the box-body assembly 1 may be assembled on an outer side, thereby improving assembly convenience. For example, when the fourth connection member 64 is a threaded fastener (such as a screw a bolt), a threaded hole, an embedded nut, an external nut, or the like may be provided on the first wall 111 for connection. When the fourth connection member 64 is a rivet, the plug-in member 41, the adapter 42, and the first wall 111 may be connected in a manner such as blind riveting.

In addition, in the present application, when neither the solution in which the adapter 42 is separately connected to the plug-in member 41 and the first wall 111 nor the solution in which the plug-in member 41, the adapter 42, and the first wall 111 are connected together is selected, a solution in which the adapter 42 is connected to the plug-in member 41 and the plug-in member 41 is connected to the first wall 111 may alternatively be used. To be specific, the plug-in member 41 is separately connected to the adapter 42 and the first wall 111.

For example, the adapter 42 may be first mounted to the plug-in member 41, and then the plug-in member 41 is mounted to the first wall 111, to flexibly mount the adapter 42. It should be noted that a connection manner between the adapter 42 and the plug-in member 41 is not limited. For example, the adapter 42 may be connected to the plug-in member 41 by using a connection member, or in a manner such as clamping or binding cooperation.

It should be noted that the wall thickness of the support portion 421 is not limited, and may be specifically set based on a condition (to be specific, the position at which the plug-in member 41 protrudes relative to the box-body assembly 1). For example, in some embodiments, with reference to FIG. 11 and FIG. 12, a spacing distance w between the mounting portion 411 and the first wall 111 is greater than a wall thickness D of the mounting portion 411 in an axial direction F of the first penetration hole 1111. In this way, because the spacing distance between the mounting portion 411 and the first wall 111 is large, the spacing distance cannot be resolved by using a common gasket, thereby further facilitating setting of the adapter 42 in consideration of support strength and a sealing requirement.

In some embodiments of the present application, as shown in FIG. 3, the box-body assembly 1 includes the box body 11 that is integrally stamped and formed. The box body 11 includes a bottom wall 11a and an enclosure wall 11b. A side wall of the enclosure wall 11b forms the first wall 111. For example, the box body 11 may be of a sheet-metal material and is stamped and formed into a basin, to include the bottom wall 11a and the enclosure wall 11b. In this way, because the bottom wall 11a and the enclosure wall 11b of the box body 11 are integrally stamped and formed, a sealing problem does not need to be considered at a position at which the bottom wall 11a is connected to the enclosure wall 11b, so that a sealing effect can be ensured. Therefore, an impact of muddy water on the cell assembly 2 when the muddy water infiltrates into the box body 11 through the position at which the bottom wall 11a is connected to the enclosure wall 11b can be avoided, thereby improving the reliability of the battery 100. In addition, the integrally stamped and formed box body 11 requires no splicing, so that production efficiency can be improved. In addition, the plug-in member 41 is disposed on a side surface, instead of a bottom surface or a top surface, of the box-body assembly 1, to help reduce difficulty in connecting the plug-in member 41 to the mutual-plugging structure of the power consuming apparatus.

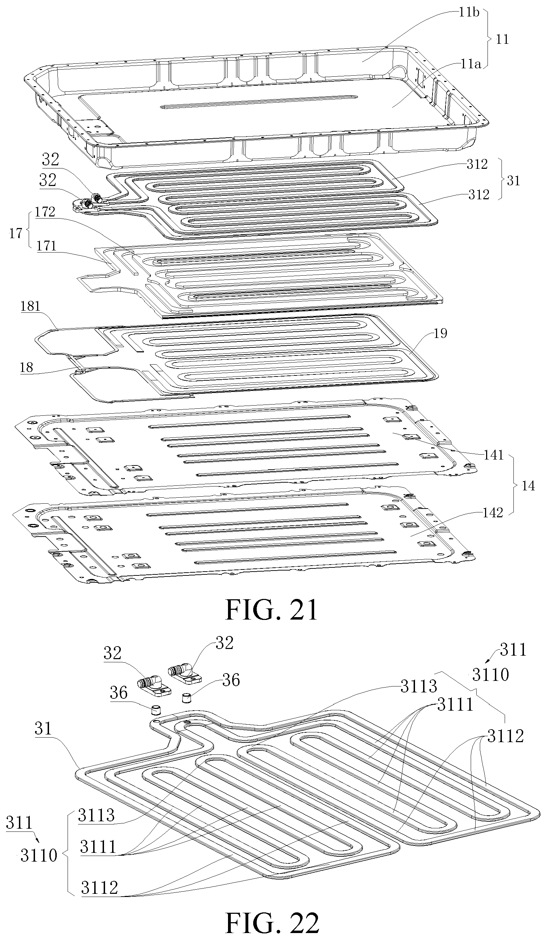

In some embodiments of the present application, as shown in FIG. 2 and FIG. 21, a heat exchange member 31 is laid on the bottom wall 11a of the box body 11. The heat exchange member 31 is configured to exchange heat with the cell assembly 2 in the box body 11.

In this embodiment, the box body 11 is a member that is integrally stamped and formed, and includes the bottom wall 11a and the enclosure wall 11b. The heat exchange member 31 is laid on the bottom wall 11a, for example, laid on an upper surface of the bottom wall 11a (for example, in the embodiment shown in FIG. 2), or laid on a lower surface of the bottom wall 11a (for example, in the embodiment shown in FIG. 21). In this way, a heat exchange area between the heat exchange member 31 and the cell assembly 2 can be improved, thereby improving a temperature adjustment effect on the cell assembly 2.

In some embodiments of the present application, as shown in FIG. 21 to FIG. 23, the heat exchange member 31 includes at least one heat exchange tube 312 extending in a bent manner. A heat exchange flow channel 311 is defined in each heat exchange tube 312. It can be learned that, when the heat exchange member 31 includes a plurality of heat exchange tubes 312 extending in a bent manner, the heat exchange member 31 includes a plurality of heat exchange flow channels 311. For example, the heat exchange tube 312 may be of an aluminum material, or may be of a steel material. For example, the heat exchange tube 312 is of an aluminum material, so that an overall weight of the battery 100 is low.

For example, the heat exchange tube 312 is bent at a bending position in a curved manner, and the curved bending can reduce flow resistance of a fluid and reduce a pressure drop. Further, the heat exchange tube 312 is bent at the bending position in the curved manner, so that a flow rate of a heat exchange fluid in the heat exchange flow channel 311 can be improved, thereby improving heat exchange efficiency of the heat exchange member 31.

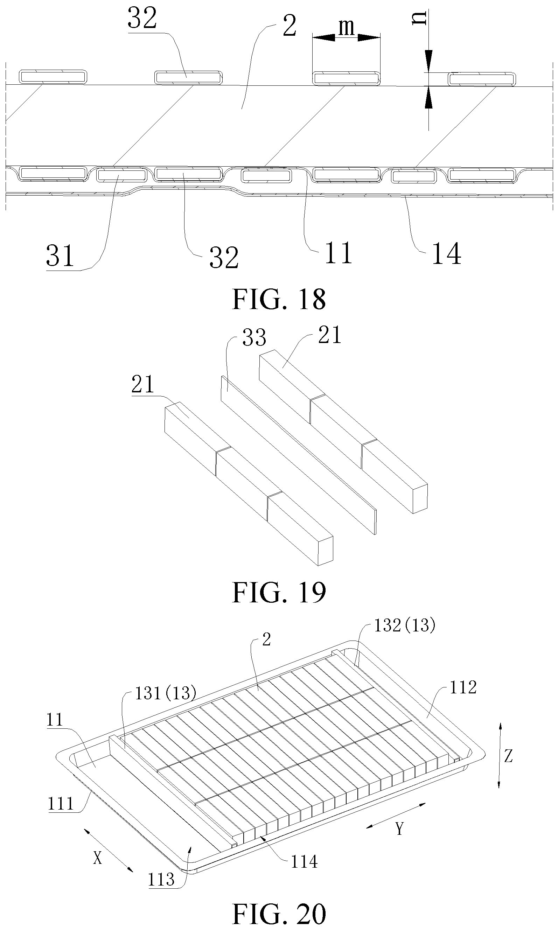

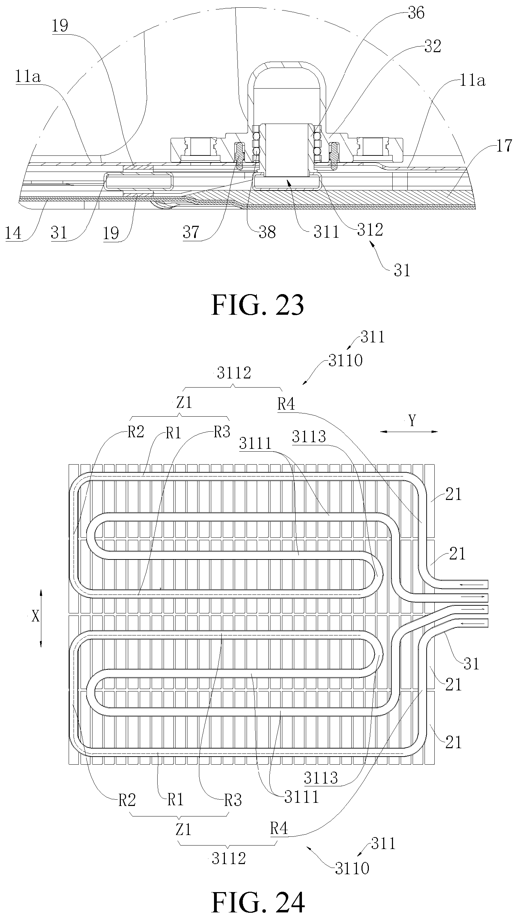

For example, the heat exchange tube 312 is of a flat-tube structure. With reference to FIG. 18 and FIG. 23, the flat-tube structure refers to a tube form whose width m is greater than a thickness n. A heat exchange member used in a battery is usually of a double-layer brazing sheet structure, that is, is formed by brazing two layers of sheet materials, and the heat exchange flow channel is formed between the two layers of sheet materials. For example, a flat tube may be formed by splicing a plurality of tube sections that are obtained through extrusion molding. A thickness of the flat tube may be far less than a thickness of the double-layer brazing sheet structure, so that smaller space is occupied, a capacity of the battery 100 is improved, and a weight, a volume, and costs of the battery 100 are reduced.

In some embodiments of the present application, as shown in FIG. 21, the box-body assembly 1 includes a bottom protection plate 14 located below the box body 11. The heat exchange member 31 is located outside the box body 11, and is located between the bottom wall 11a of the box body 11 and the bottom protection plate 14. In this way, the heat exchange member 31 is disposed outside the box body 11, so that a problem of insulation between the heat exchange member 31 and the battery cell 11 in the box body 11 does not need to be considered, thereby simplifying an insulation design of the heat exchange member 31, reducing processing difficulty and production costs, resolving a problem of short circuiting between the cell assembly 2 and the heat exchange member 31, and improving the reliability of the battery 100. In addition, the heat exchange member 31 is disposed outside the box body 11, so that the heat exchange member 31 does not occupy space in the box body 11. Therefore, the capacity of the battery 100 is not reduced due to mounting of the heat exchange member 31, thereby better ensuring the capacity of the battery 100. In addition, the heat exchange member 31 is disposed below the bottom wall 11a of the box body 11, so that the heat exchange member 31 can exchange heat with the cell assembly 2 within a large range, thereby improving the temperature adjustment effect and temperature adjustment efficiency on the cell assembly 2. In addition, the bottom protection plate 14 is disposed below the heat exchange member 31, so that the heat exchange member 31 can be reliably protected, thereby reducing a risk that the heat exchange member 31 is damaged by crashing and bumping, and improving work reliability of the heat exchange member 31.

In some embodiments of the present application, as shown in FIG. 21 and FIG. 23, the heat exchange member 31 is connected to a current collector 32 by using a connection tube 36 that extends through the bottom wall 11a. In this way, the current collector 32 is disposed inside the box body 11, the heat exchange member 31 is disposed outside the box body 11, and the connection tube 36 that extends through the box body 11 is disposed to communicate the current collector 32 with the heat exchange member 31, to facilitate communication between the current collector 32 and the heat exchange member 31, and facilitate mounting of the current collector 32 and the heat exchange member 31. In addition, a flow path can be shortened, and flow resistance of a heat exchange liquid is reduced. In addition, the current collector 32 is disposed inside the box body 11, so that no external liquid access path communicating with the heat exchange member 31 needs to be disposed outside the box body 11, to avoid an increase in sealing difficulty caused for satisfying an extension requirement of the external liquid access path. Therefore, sealing difficulty of the battery 100 can be reduced, a structure and costs of the battery 100 are simplified, and sealing reliability is improved. In addition, it is difficult to crack and damage the built-in current collector 32, so that a leakage risk is reduced, work reliability and reliability of the heat exchange assembly 3 is improved, and reliability of the battery 100 during transportation and use in a vehicle can be improved. Certainly, the present application is not limited thereto. For example, in another embodiment of the present application, the heat exchange member 31 may be disposed to partially penetrate through the bottom wall 11a to be directly connected to the current collector 32 inside the box body 11.

In some embodiments of the present application, as shown in FIG. 23, the connection tube 36 is sleeved inside the current collector 32, a first sealing member 37 is disposed between the current collector 32 and the box body 11 for sealing cooperation, and the first sealing member 37 is disposed surrounding a surface on which the current collector 32 cooperates with the connection tube 36. In the foregoing technical solution, the first sealing member 37 is disposed between the current collector 32 and the box body 11, and the first sealing member 37 is disposed surrounding the surface on which the current collector 32 cooperates with the connection tube 36, that is, an entire peripheral region in which the connection tube 36 is connected to the current collector 32 can be sealed by using the first sealing member 37, so that a risk that a heat exchange fluid overflowing from a cooperation position of the connection tube 36 overflows into the box body 11 from a position at which the current collector 32 cooperates with the box body 11 can be reduced, thereby improving the reliability of the battery 100. In addition, a position at which the first sealing member 37 is disposed is clear, so that assembly of the first sealing member 37 is easy, thereby reducing assembly difficulty and design difficulty.

In some embodiments of the present application, as shown in FIG. 23, a second sealing member 38 is further disposed at a position at which the current collector 32 cooperates with the connection tube 36, and the second sealing member 38 is disposed surrounding the connection tube 36. In the foregoing technical solution, the second sealing member 38 is disposed between the current collector 32 and the connection tube 36, so that a risk that the heat exchange fluid overflows from the position at which the current collector 32 cooperates with the connection tube 36 can be reduced, thereby improving the reliability of the battery 100. In addition, a position at which the second sealing member 38 is disposed is clear, so that assembly of the second sealing member 38 is easy, thereby reducing assembly difficulty and design difficulty.

In some embodiments of the present application, as shown in FIG. 21 and FIG. 23, the box-body assembly 1 further includes a sealing member 18. The sealing member 18 is disposed between the bottom wall 11a and the bottom protection plate 14 for sealing cooperation, and includes a peripheral portion 181 disposed surrounding the heat exchange member 31. An intra-ring region of the connection tube 36 that corresponds to the peripheral portion 181 extends through the bottom wall 11a.

Therefore, a position at which the connection tube 36 extends through the bottom wall 11a is disposed in the region surrounded by the peripheral portion 181, so that when the peripheral portion 181 is disposed between the bottom wall 11a and the bottom protection plate 14 for sealing cooperation, it is not easy for muddy water, particles, and the like outside the box-body assembly 1 to pass through the peripheral portion 181 to enter between the bottom wall 11a and the bottom protection plate 14, and flow to a position at which the connection tube 36 extends through the bottom wall 11a to enter the box body 11, so that the reliability of the battery 100 can be improved. In addition, because the peripheral portion 181 is disposed surrounding the heat exchange member 31, it is not easy for muddy water, particles, and the like outside the box-body assembly 1 to pass through the peripheral portion 181 to enter between the bottom wall 11a and the bottom protection plate 14, and pollute or corrode the heat exchange member 31 between the bottom wall 11a and the bottom protection plate 14, so that reliability and a service life of the heat exchange member 31 are improved.

In some embodiments of the present application, as shown in FIG. 21 and FIG. 23, a bottom adhesive layer 19 is respectively provided between the heat exchange member 31 and the bottom wall 11a, and between the heat exchange member 31 and the bottom protection plate 14. In other words, a surface of the heat exchange member 31 on a side facing the bottom wall 11a is fixedly connected to the bottom wall 11a by using the bottom adhesive layer 19, and a surface of the heat exchange member 31 on a side facing the bottom protection plate 14 is also fixedly connected to the bottom protection plate 14 by using the bottom adhesive layer 19. In this way, on one hand, stability of heat transfer between the heat exchange member 31 and the bottom wall 11a can be improved, and on the other hand, protection on the surfaces of the heat exchange member 31 on the two sides can be improved, thereby protecting the heat exchange member 31. It should be noted that a sequence of disposing the bottom adhesive layer 19 is not limited. For example, the bottom adhesive layer 19 may be coated on the two sides of the heat exchange member 31, may be coated on a side of the bottom wall 11a facing the heat exchange member 31, or may be coated on a side of the bottom protection plate 14 facing the heat exchange member 31. For example, the bottom adhesive layer 19 may be structural adhesive or high-thermal conductivity double-faced adhesive.

In some embodiments of the present application, as shown in FIG. 21 and FIG. 23, the heat exchange member 31 includes the at least one heat exchange tube 312 extending in a bent manner. The box-body assembly 1 further includes a foaming member 17. The foaming member 17 is disposed between the bottom wall 11a and the bottom protection plate 14, and includes a first foaming portion 171 disposed surrounding the heat exchange member 31, and a second foaming portion 172 disposed between adjacent tube sections of a same heat exchange tube 312 or between adjacent heat exchange tubes 312.

In this way, space between the bottom wall 11a and the bottom protection plate 14 from which the heat exchange member 31 is removed can be filled by using the foaming member 17, that is, the foaming member 17 is disposed to be complementary to the heat exchange member 31, so that the foaming member 17 can support the bottom wall 11a and the bottom protection plate 14. When a protection plate 13 undergoes collision and shock, the foaming member 17 can buffer the shock and reduce an acting force of the bottom protection plate 14 on the heat exchange member 31 or the box body 11, thereby protecting the heat exchange member 31 and the cell assembly 2 in the box body 11. In addition, the foaming member 17 can further fill a gap between the heat exchange tubes 312, and can function to support the heat exchange tube 312 and limit a position of the heat exchange tube 312, so that the heat exchange tube 312 can be stably located at a disposition position, thereby achieving stable temperature adjustment.

In some embodiments of the present application, as shown in FIG. 21 and FIG. 23, the foaming member 17 is connected to the bottom protection plate 14, and an upper surface of the heat exchange member 31 is higher than an upper surface of the foaming member 17. In other words, in comparison with a surface of the foaming member 17 on a side facing the bottom wall 11a, the surface of the heat exchange member 31 on the side facing the bottom wall 11a is provided closer to the bottom wall 11a. In this way, forming difficulty of the foaming member 17 can be reduced, and it is beneficial to control thickness uniformity of the foaming member 17, so that disposition of the foaming member 17 does not interfere with heat transfer cooperation between the heat exchange member 31 and the bottom wall 11a, thereby improving stability and reliability of heat transfer between the heat exchange member 31 and the bottom wall 11a, and facilitating improvement of an effect of temperature adjustment on the cell assembly 2. Therefore, the work reliability of the battery 100 is improved.

In addition, when the bottom adhesive layer 19 is disposed between the heat exchange member 31 and the bottom wall 11a, the foaming member 17 is disposed to be connected to the bottom protection plate 14, to help reduce difficulty in disposing the bottom adhesive layer 19 between the heat exchange member 31 and the bottom wall 11a, and help improve uniformity of the bottom adhesive layer 19 disposed between the heat exchange member 31 and the bottom wall 11a, thereby improving the stability and the reliability of the heat transfer between the heat exchange member 31 and the bottom wall 11a, and facilitating improvement of the effect of temperature adjustment on the cell assembly 2. Therefore, the work reliability of the battery 100 is improved.

For example, the foaming member 17 may be processed on the bottom protection plate 14 by using a mold through a foaming craft, to ensure thickness uniformity of the foaming member 17. Then, adhesive is applied to the heat exchange member 31 or the bottom wall 11a. Next, the heat exchange member 31 is mounted between the bottom wall 11a and the protection plate 13 that has the foaming member 17. When the heat exchange member 31 protrudes toward the bottom wall 11a relative to the foaming member 17, stability and reliability of the heat transfer cooperation between the heat exchange member 31 and the bottom wall 11a can be ensured.

In some other embodiments of the present application, the bottom protection plate 14, the box body 11, and the heat exchange member 31 may be first assembled in position, and then a foaming liquid is injected between the bottom protection plate 14 and the bottom wall 11a of the box body 11 to perform foaming. In this case, a position at which the foaming liquid is injected needs to be considered, to ensure a uniform foaming height at each position, thereby avoiding an impact on connection between the heat exchange member 31 and the box body 11. Alternatively, in some other embodiments of the present application, the foaming member 17 may be processed on the bottom wall 11a of the box body 11 by using a mold through the foaming craft, and then the heat exchange member 31, the protection plate 13, and the like are assembled.

It should be noted that composition and a material of the bottom protection plate 14 are not limited. For example, the bottom protection plate 14 may be a single-layer plate. For example, the bottom protection plate 14 may be a metal plate having an anti-corrosion layer on an outer surface. Alternatively, the bottom protection plate 14 may be formed by combining a plurality of layers of plates. For example, with reference to FIG. 21, the bottom protection plate 14 includes a first protection plate 141 and a second protection plate 142. The second protection plate 142 is located below the first protection plate 141. The first protection plate 141 may be of a metal material, and the second protection plate 142 may be of a corrosion-resistant material, for example, a PVC (polyvinyl chloride, an abbreviation of Polyvinyl chloride) material.

In some embodiments of the present application, as shown in FIG. 22 and FIG. 24, the heat exchange member 31 includes at least one first heat exchange flow channel 3110. For example, a heat exchange flow channel 311 defined in the at least one heat exchange tube 312 is the first heat exchange flow channel 3110.

The first heat exchange flow channel 3110 includes a first heat exchange segment 3111, a second heat exchange segment 3112, and a third heat exchange segment 3113. The second heat exchange segment 3112 is bent to form a first U-shaped region Z1. The first heat exchange segment 3111 is disposed in the first U-shaped region Z1 in a bent manner, and is connected to the second heat exchange segment 3112 through the third heat exchange segment 3113 in a bent manner. The second heat exchange segment 3112 is located on an outermost peripheral side of the heat exchange flow channel 311.

Because peripheral ones of the battery cells 21 are closer to a side wall of the box-body assembly 1 in comparison with internal ones of the battery cells 21, the peripheral ones of the battery cells 21 more easily dissipate heat to the outside by using a structure such as the side wall of the box-body assembly 1. However, the internal ones of the battery cells 21 have difficulty in heat dissipation and are greatly affected by heat dissipation of adjacent battery cells 21. In this case, battery cells 21 at different positions has different heat dissipation conditions, and consequently, temperature distribution between the peripheral ones of the battery cells 21 and the internal ones of the battery cells 21 in the battery 100 is nonuniform after the battery 100 runs. As a result, stability of the battery 100 during running is poor, and battery performance is prone to attenuation.

In view of this, in the foregoing technical solution, the second heat exchange segment 3112 is bent to form the first U-shaped region Z1, the first heat exchange segment 3111 is disposed in the first U-shaped region Z1 in a bent manner, and the second heat exchange segment 3112 is set to be located on the outermost peripheral side of the first heat exchange flow channel 3110. When the heat exchange member 31 in this embodiment is used to exchange heat with the cell assembly 2, at least a part of the first U-shaped region Z1 formed by the second heat exchange segment 3112 at the periphery may be opposite to the peripheral ones of the battery cells 21 in the battery 100, so that the second heat exchange segment 3112 can exchange heat with an outer periphery of the cell assembly 2. The first heat exchange segment 3111 in the first U-shaped region Z1 is opposite to the internal ones of the battery cells 21, so that the heat exchange member 31 can compensate for a temperature difference between the interior and the exterior that is caused by heat exchange between at least a part of the battery cells 21 at the periphery and an environment. Therefore, a heat exchange effect of the battery cells 21 at the periphery of the cell assembly 2 and a heat exchange effect of the battery cells 21 in the interior of the cell assembly 2 tend to be consistent, to help improve a temperature difference of the cell assembly 2 in different environments, and improve temperature university of the battery 100, so that a service life of the battery 100 can be improved to some extent.

For example, when the heat exchange member 31 heats the cell assembly 2, the heat exchange fluid may flow from the first heat exchange segment 3111 to the second heat exchange segment 3112, but the heat exchange fluid may alternatively flow from the second heat exchange segment 3112 to the first heat exchange segment 3111. For example, when flowing from the second heat exchange segment 3112 to the first heat exchange segment 3111, the heat exchange fluid may first heat the battery cells 21 at the periphery of the cell assembly 2, and then cool battery cells 21 at the middle of the cell assembly 2. Because the battery cells 21 at the periphery in the battery 100 dissipates more heat to the external environment, temperatures of the battery cells 21 at the periphery in the battery 100 are more easily decreased. The heat exchange fluid first heats the battery cells 21 at the periphery in the battery 100, so that the heat exchange fluid with a high temperature can increase the temperatures of the battery cells 21 at the periphery and compensate for heat lost to the external environment due to heat dissipation of the battery cells 21, to satisfy a heating requirement of the battery cells 21. Contact areas between the battery cells 21 at the middle of the cell assembly 2 and the external environment are small, and heat loss is small. The heat exchange fluid with a low temperature flowing in the first heat exchange segment 3111 can satisfy the heating requirement of the battery cells 21 well in cooperation with the heat generated by the battery cells 21. In this way, the battery cells 21 at the periphery in the battery 100 and the battery cells 21 at the middle of the cell assembly 2 can achieve substantially consistent heating effects, so that the battery cells 21 at the periphery in the battery 100 and the battery cells 21 at the middle of the cell assembly 2 have consistent temperatures after heating, thereby achieving more uniform temperature distribution in the battery 100.

For example, in this embodiment, when the heat exchange member 31 performs heat dissipation and cooling on the cell assembly 2, the heat exchange fluid may flow from the first heat exchange segment 3111 to the second heat exchange segment 3112, but the heat exchange fluid may alternatively flow from the second heat exchange segment 3112 to the first heat exchange segment 3111. When the heat exchange fluid flows from the first heat exchange segment 3111 to the second heat exchange segment 3112, the heat exchange fluid may first cool battery cells 21 at the middle of the battery 100 (that is, internal battery cells 21 on an inner side of the periphery), and then cool battery cells 21 at peripheral positions of the battery 100. Because a heat dissipation condition of the battery cells 21 at the peripheral positions of the battery 100 is better than that of the internal battery cells 21, the heat exchange fluid with a low temperature in the first heat exchange segment 3111 can better satisfy a heat dissipation requirement of the battery cells 21 at the middle of the battery 100. In addition, because the battery cells 21 at the peripheral positions can naturally dissipate heat directly toward the external environment, when a temperature of the heat exchange fluid in the second heat exchange segment 3112 is slightly high, a heat dissipation requirement of the peripheral battery cells 21 can still be satisfied. Therefore, the battery cells 21 at the peripheral positions of the battery 100 and the battery cells 21 at the middle of the battery 100 achieve a roughly consistent cooling effect, and further, the battery cells 21 at the peripheral positions of the battery 100 and the battery cells 21 at the middle of the battery 100 have a consistent temperature after cooling and heat dissipation, so that the temperature distribution in the battery 100 is more uniform.

In some embodiments of the present application, as shown in FIG. 2 and FIG. 24, the cell assembly 2 includes a plurality of battery units 20 arranged along a first direction X. Each of the battery units 20 includes a plurality of battery cells 21 sequentially stacked along a second direction Y. At least a part of the second heat exchange segment 3112 correspondingly exchanges heat with a plurality of ones of the battery cells 21 located at an outermost periphery of the cell assembly 2.

In the foregoing technical solution, arrangement of the battery cells 21 is coordinated with extended arrangement of the first heat exchange flow channel 3110, and at least the part of the second heat exchange segment 3112 is set to correspondingly exchange heat with the battery cells 21 at the periphery, for example, transfer heat through adhering, so that heat exchange efficiency of the battery cells 21 at the periphery can be improved, thereby further balancing a temperature difference caused when heat dissipation of the battery cells 21 at the periphery in the battery 100 is greater than heat dissipation of the inner battery cells 21.

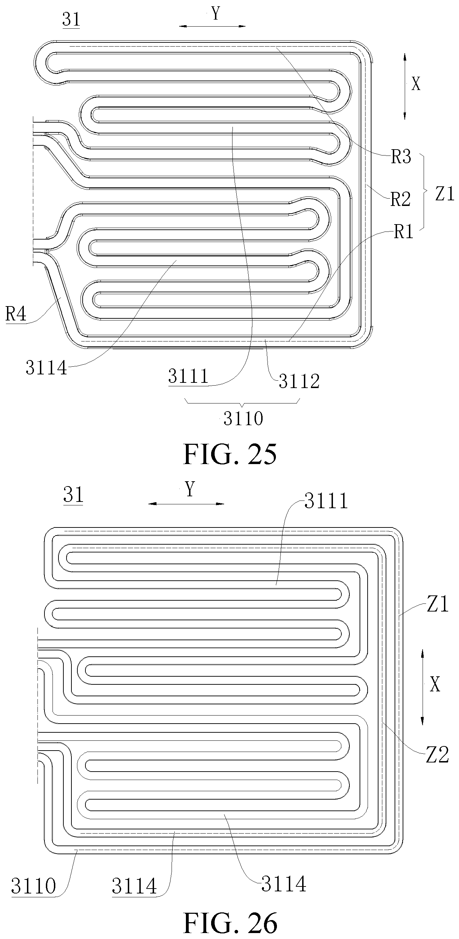

In some embodiments, with reference to FIG. 24 and FIG. 25, the second heat exchange segment 3112 includes a first segment R1, a second segment R2, and a third segment R3 that are successively bent and connected to construct the first U-shaped region Z1. The first segment R1 and the third segment R3 both extend along the second direction Y, and the second segment R2 extends along the first direction X. In the foregoing technical solution, a coverage area of the first U-shaped region Z1 may be wide, to facilitate heat exchange for battery cells 21 at an outer periphery of the cell assembly 2, thereby further improving the temperature university of the battery 100.

In some embodiments, with reference to FIG. 24 and FIG. 25, the second heat exchange segment 3112 further includes a fourth segment R4 bent and connected to the first segment R1. The fourth segment R4 and the second segment R2 are separately disposed on two sides of the first segment R1 along the second direction Y, and the fourth segment R4 extends toward a direction closer to the third segment R3 in the first direction X. In this way, the fourth segment R4 can block at least a part of an opening of the first U-shaped region Z1, so that the second heat exchange segment 3112 located at an outer periphery of the first heat exchange flow channel 3110 can exchange heat with the battery cells 21 at the outer periphery of the cell assembly 2 in a larger range, thereby further improving the temperature university of the battery 100.

In some embodiments, with reference to FIG. 25 and FIG. 26, the heat exchange member 31 further includes at least one second heat exchange flow channel 3114. The second heat exchange flow channel 3114 and the first heat exchange flow channel 3110 are bent in a same plane. The second heat exchange flow channel 3114 is disposed in the first U-shaped region Z1 in a bent manner.

For example, the embodiment of FIG. 25 shows a cooperation manner of one first heat exchange flow channel 3110 and one second heat exchange flow channel 3114. For example, the embodiment of FIG. 26 shows a cooperation manner of one first heat exchange flow channel 3110 and two second heat exchange flow channels 3114.

In the foregoing technical solution, the at least one first heat exchange flow channel 3110 and the at least one second heat exchange flow channel 3114 are disposed, and a relative position relationship between the first heat exchange flow channel 3110 and the second heat exchange flow channel 3114 is coordinated, so that arrangement of the heat exchange flow channels can be flexibly designed based on a cooling requirement of the battery 100, thereby further optimizing a temperature adjustment effect on the cell assembly, and improving the temperature university of the battery 100.

In some embodiments, with reference to FIG. 26, the at least one second heat exchange flow channel 3114 is bent to form a second U-shaped region Z2. At least a part of the first heat exchange segment 3111 is disposed in the second U-shaped region Z2 of the second heat exchange flow channel 3114.

For example, FIG. 26 shows that one second heat exchange flow channel 3114 is bent to form the second U-shaped region Z2, at least a part of the first heat exchange segment 3111 is disposed in the second U-shaped region Z2 of the second heat exchange flow channel 3114, and the other second heat exchange flow channel 3114 is also disposed in the second U-shaped region Z2 of the second heat exchange flow channel 3114.

In the foregoing technical solution, the at least one second heat exchange flow channel 3114 is set to be bent to form the second U-shaped region Z2, and at least the part of the first heat exchange segment 3111 is disposed in the second U-shaped region Z2 of the second heat exchange flow channel 3114, to facilitate coordination and cooperation between the first heat exchange flow channel 3110 and the second heat exchange flow channel 3114, thereby further improving the temperature university of the battery 100.

In some embodiments of the present application, as shown in FIG. 18 and FIG. 19, the box-body assembly 1 includes the box body 11. The battery 100 includes the cell assembly 2 disposed in the box body 11. The cell assembly 2 includes the plurality of battery cells 21. The battery 100 includes a temperature adjustment member 7. The temperature adjustment member 7 includes at least one of a first temperature adjustment member 71, a second temperature adjustment member 72, and a third temperature adjustment member 73. The first temperature adjustment member 71 is disposed outside the box body 11 and is attached to an outer wall of the box body 11. The second temperature adjustment member 72 is disposed in the box body 11 and is located between the cell assembly 2 and the box-body assembly 1. The third temperature adjustment member 73 is disposed in the box body 11 and is located between neighboring ones of the battery cells 21.

For example, the battery 100 may include only one of the first temperature adjustment member 71, the second temperature adjustment member 72, and the third temperature adjustment member 73, or may include two of the first temperature adjustment member 71, the second temperature adjustment member 72, and the third temperature adjustment member 73, or may include all of the first temperature adjustment member 71, the second temperature adjustment member 72, and the third temperature adjustment member 73. In this way, a proper position may be selected for disposition of the temperature adjustment member 7 based on an actual situation, to satisfy a temperature adjustment requirement of the battery 100.

A specific disposition position of the first temperature adjustment member 71 outside the box body 11 is not limited. For example, with reference to FIG. 18, at least a part of the first temperature adjustment member 71 may be disposed below the bottom wall 11a of the box body 11, to exchange heat with the cell assembly 2 in a larger range, thereby improving the temperature adjustment effect on the cell assembly 2. For another example, at least a part of the first temperature adjustment member 71 may alternatively be disposed on an outer side of the enclosure wall 11b of the box body 11.

For example, as shown in FIG. 18, the box-body assembly 1 may further include the bottom protection plate 14 located below the bottom wall 11a of the box body 11, to protect the box body 11 such as anti-bumping. In this case, if the first temperature adjustment member 71 is disposed below the bottom wall 11a of the box body 11, the first temperature adjustment member 71 may be located between the bottom protection plate 14 and the bottom wall 11a of the box body 11, so that the bottom protection plate 14 can further function to protect the first temperature adjustment member 71.

A specific disposition position of the second temperature adjustment member 72 in the box-body assembly 1 is not limited. For example, with reference to FIG. 18, at least a part of the second temperature adjustment member 72 may be disposed above the bottom wall 11a of the box body 11, to be sandwiched between the bottom wall 11a of the box body 11 and a bottom of the cell assembly 2, so as to exchange heat with the cell assembly 2 in a larger range, thereby improving the temperature adjustment effect on the cell assembly 2. For another example, at least a part of the second temperature adjustment member 72 may be disposed below the box cover 12, to be sandwiched between the box cover 12 and a top of the cell assembly 2, so as to exchange heat with the cell assembly 2 in a larger range, thereby improving the temperature adjustment effect on the cell assembly 2.

A specific disposition position of the third temperature adjustment member 73 in the box-body assembly 1 is not limited. For example, with reference to FIG. 19, larger surfaces of adjacent battery cells 21 in the cell assembly 2 may face each other, and the third temperature adjustment member 73 is disposed between the larger surfaces of the adjacent battery cells 21, so that the temperature adjustment effect on the battery cells 21 can be improved.

For example, with reference to FIG. 18, the temperature adjustment member 7 may be of a flat-tube structure. To be specific, the temperature adjustment member 7 is formed in a form of a flat tube whose width m is greater than a thickness n. A flow channel may be formed in the flat tube. A heat exchange liquid may be injected into the flow channel, to exchange heat with the cell assembly 2, thereby adjusting a temperature of the battery 100.

A heat exchange member used in a battery is usually of a double-layer brazing sheet structure, that is, is formed by brazing two layers of sheet materials, and the heat exchange flow channel is formed between the two layers of sheet materials. For example, a flat tube may be formed by splicing a plurality of tube sections that are obtained through extrusion molding. A thickness of the flat tube may be far less than a thickness of the double-layer brazing sheet structure, so that smaller space is occupied, and the capacity of the battery is improved.

In addition, a thermal management system of the battery 100 is not limited to include only the foregoing temperature adjustment member 7. For example, in some embodiments, with reference to FIG. 20, the box-body assembly 1 may further include an expansion beam 13 disposed in the box body 11. For example, there may be a plurality of expansion beams 13, and the cell assembly 2 is sandwiched between the plurality of expansion beams 13. For example, a first expansion beam 131 and a second expansion beam 132 may be included, and the cell assembly 2 is sandwiched between the first expansion beam 131 and the second expansion beam 132. A heat exchange flow channel may be disposed in the expansion beam 13 for temperature adjustment, thereby forming a part of the thermal management system.

According to an embodiment of a third aspect of the present application, an embodiment of the present application further provides a power consuming apparatus, including the battery 100 in any one of the foregoing solutions. The battery 100 is configured to supply electric energy to the power consuming apparatus. The power consuming apparatus may be any device or system in which the battery 100 is used. Because performance of the battery 100 is improved, it is beneficial to improve working power consuming performance of the power consuming apparatus.

The battery 100 in three specific embodiments of the present application is described below.

### Embodiment 1

With reference to FIG. 2 to FIG. 9, the battery 100 includes the box-body assembly 1, the cell assembly 2, and the plug-in assembly 4. The box-body assembly 1 includes the box body 11, the box cover 12, and the bottom protection plate 14. The box body 11 is a member that is integrally stamped and formed, and includes the bottom wall 11a and the enclosure wall 11b, to form a shape of a stamped box with an open top. The cell assembly 2 is disposed in the box body 11. The plug-in assembly 4 is mounted to the enclosure wall 11b and is electrically connected to the cell assembly 2. The box cover 12 covers a top of the box body 11. The bottom protection plate 14 is disposed below the bottom wall 11a to protect the box body 11.

With reference to FIG. 20, the first expansion beam 131 is disposed in the box body 11. The first expansion beam 131 extends along the first direction X. Two side walls of the enclosure wall 11b that are opposite to each other in the second direction Y are respectively the first wall 111 and a second wall 112. Space between the first expansion beam 131 and the first wall 111 in the box body 11 is first space 113. Space between the first expansion beam 131 and the second wall 112 in the box body 11 is second space 114. The cell assembly 2 is disposed in the second space 114 and abuts against the first expansion beam 131. The first space 113 is configured to mount a high-voltage electric device and the like. It should be noted that the first direction X and the second direction Y are perpendicular, one of the first direction X and the second direction Y is a length direction of the box body 11, the other is a width direction of the box body 11. A height direction of the box body 11 is a third direction Z. The third direction Z is perpendicular to the first direction X and the second direction Y, that is, a spacing direction between the bottom wall 11a of the box body 11 and the box cover 12.

The first wall 111 is provided with the first penetration hole 1111. The plug-in assembly 4 includes the plug-in member 41 and the adapter 42. The plug-in member 41 includes the mounting portion 411 and the power connection portion 412. The mounting portion 411 is located on the outer side of the first wall 111. The power connection portion 412 includes the external power connection end 4121 located on the side of the mounting portion 411 away from the first wall 111 and the internal power connection end 4122 located on the side of the mounting portion 411 close to the interior of the box-body assembly 1. The internal power connection end 4122 is disposed corresponding to the first penetration hole 1111. The adapter 42 is located outside the box-body assembly 1, and includes the support portion 421 and the connection portion 422. The support portion 421 is disposed between the first wall 111 and the mounting portion 411 to support the mounting portion 411, so as to space the mounting portion 411 from the first wall 111. The connection portion 422 is located at the periphery of the support portion 421 and is connected to the first wall 111.

The support portion 421 includes the end plate portion 4213 and the surrounding plate portion 4214. The surrounding plate portion 4214 is disposed surrounding the first penetration hole 1111. The end plate portion 4213 is connected to the end of the surrounding plate portion 4214 away from the first wall 111. The mounting portion 411 is supported on the side of the end plate portion 4213 away from the first wall 111. The second penetration hole 4211 extending through is provided on the end plate portion 4213. The avoidance cavity 4215 having an opening facing the first wall 111 is formed between the end plate portion 4213 and the surrounding plate portion 4214. The second penetration hole 4211 is disposed corresponding to the first penetration hole 1111. The avoidance cavity 4215 communicates with the first penetration hole 1111 and the second penetration hole 4211. The power connection portion 412 is inserted into the second penetration hole 4211. The first sealing member 51 is disposed between the surrounding plate portion 4214 and the first wall 111. The first sealing member 51 is disposed surrounding the first penetration hole 1111. The second sealing member 52 is disposed between the support portion 421 and the mounting portion 411. The second sealing member 52 is disposed surrounding the second penetration hole 4211.

The mounting portion 411 is connected to the support portion 421 by the first connection member 61. The first connection member 61 includes the first rod portion 611 and the first head portion 612. The first head portion 612 abuts against the side of the mounting portion 411 away from the support portion 421. The first rod portion 611 extends through the mounting portion 411 and is connected to the support portion 421. The adapter 42 further includes the connection portion 422. The connection portion 422 is located at the periphery of the support portion 421 and extends beyond the coverage area of the mounting portion 411. The connection portion 422 is connected to the first wall 111. The connection portion 422 is connected to the first wall 111 by the second connection member 62. The second connection member 62 includes the second rod portion 621 and the second head portion 622. The second head portion 622 abuts against the side of the connection portion 422 away from the first wall 111. The second rod portion 621 extends through the connection portion 422 and is connected to the first wall 111.

For example, during assembly, the adapter 42 is first disposed on the outer side of the box-body assembly 1, then the second connection member 62 (for example, a screw) may enter from the outside to the inner side, to first fix the adapter 42 to the box-body assembly 1. Then the plug-in member 41 is fitted on the outer side of the adapter 42, and then the first connection member 61 (for example, a screw) enters from the outside to the inner side, to fix the plug-in member 41 to the adapter 42, thereby completing mounting of the plug-in assembly 4.

### Embodiment 2

A form of the adapter 42 in Embodiment 2 is different from that in Embodiment 1, and a manner of connection to the plug-in member 41 and the box-body assembly 1 is different. In Embodiment 2, with reference to FIG. 10 to FIG. 13, the adapter 42 includes the support portion 421 but does not include the connection portion 422. The through hole 4216 is provided on the support portion 421. The through hole 4216 corresponds to the first penetration hole 1111, and the hole opening formed on the surface of the side of the support portion 421 away from the first wall 111 forms the second penetration hole 4211, thereby simplifying the structure of the adapter 42, facilitating the processing of the adapter 42, and improving the supporting strength of the adapter 42.

The mounting portion 411 is connected to the support portion 421 by the first connection member 61. The first connection member 61 includes the first rod portion 611 and the first head portion 612. The first head portion 612 abuts against the side of the mounting portion 411 away from the support portion 421. The first rod portion 611 extends through the mounting portion 411 and is connected to the support portion 421. In addition, the support portion 421 is connected to the first wall 111 by the third connection member 63. The third connection member 63 includes the third rod portion 631 and the third head portion 632. The third head portion 632 abuts against the inner side of the first wall 111. The third rod portion 631 extends through the first wall 111 and is connected to the support portion 421. Positions of the first connection member 61 and the third connection member 63 are staggered.

For example, during assembly, the adapter 42 is first disposed on the outer side of the box-body assembly 1, then the third connection member 63 (for example, a screw) may enter from the inner side to the outside, to first fix the adapter 42 to the box-body assembly 1. Then the plug-in member 41 is fitted on the outer side of the adapter 42, and then the first connection member 61 (for example, a screw) enters from the outside to the inner side, to fix the plug-in member 41 to the adapter 42, thereby completing mounting of the plug-in assembly 4. In this way, space occupation of the adapter 42 can be reduced, and independent connection between the adapter 42 and the box-body assembly 1 and independent connection between the adapter 42 and the plug-in member 41 can be implemented, thereby improving assembly efficiency of the plug-in assembly 4.

### Embodiment 3

A form of the adapter 42 in Embodiment 3 is different from that in Embodiment 1, and a manner of connection to the plug-in member 41 and the box-body assembly 1 is different. In Embodiment 3, with reference to FIG. 14 to FIG. 17, the adapter 42 includes the support portion 421 but does not include the connection portion 422. The through hole 4216 is provided on the support portion 421. The through hole 4216 corresponds to the first penetration hole 1111, and the hole opening formed on the surface of the side of the support portion 421 away from the first wall 111 forms the second penetration hole 4211, thereby simplifying the structure of the adapter 42, facilitating the processing of the adapter 42, and improving the supporting strength of the adapter 42. The plug-in member 41, the adapter 42, and the first wall 111 are connected together by the fourth connection member 64. The fourth connection member 64 includes the fourth rod portion 641 and the fourth head portion 642. The fourth head portion 642 abuts against the side of the mounting portion 411 away from the adapter 42. The fourth rod portion 641 extends through the mounting portion 411 and the adapter 42 and is connected to the first wall 111.

For example, during assembly, the adapter 42 is first disposed on the outer side of the box-body assembly 1, then the plug-in member 41 is fitted on the outer side of the adapter 42, and then the fourth connection member 64 (for example, a screw) may enter from the outside to the inner side, to fix the plug-in member 41 and the adapter 42 to the box-body assembly 1 together. In this way, the plug-in assembly 4 is mounted and fixed, and space occupation of the adapter 42 is reduced.

It should be noted that in the absence of conflicts, the embodiments and the features in the embodiments in the present application can be combined with each other.

The foregoing descriptions are merely optional embodiments of the present application, but are not intended to limit the present application. A person skilled in the art understands that various modifications and variations may be made to the present application. Any modifications, equivalent substitutions, improvements, and the like made within the spirit and principle of the present application fall within the protection scope of the present application.

## Claims

1. A battery, comprising:
a box-body assembly, comprising a first wall, wherein a first penetration hole is provided on the first wall; and
a plug-in assembly, mounted to the box-body assembly and comprising a plug-in member and an adapter, wherein the plug-in member comprises a mounting portion and a power connection portion, the mounting portion is located on an outer side of the first wall, the power connection portion comprises an external power connection end located on a side of the mounting portion away from the first wall and an internal power connection end located on a side of the mounting portion close to an interior of the box-body assembly, the internal power connection end is disposed corresponding to the first penetration hole, and at least a part of the adapter is located outside the box-body assembly and supports the mounting portion, to space the mounting portion from the first wall.

2. The battery according to claim 1, wherein the adapter comprises a support portion, and the support portion is disposed between the first wall and the mounting portion to support the mounting portion.

3. The battery according to claim 2, wherein the support portion is disposed surrounding the first penetration hole, a second penetration hole corresponding to the first penetration hole is provided on the support portion, and the power connection portion is inserted into the second penetration hole.

4. The battery according to claim 3, wherein a first sealing member is disposed between the support portion and the first wall, and the first sealing member is disposed surrounding the first penetration hole.

5. The battery according to claim 4, wherein an end surface of the support portion facing the first wall has an annular groove, and the first sealing member is embedded in the groove.

6. The battery according to any one of claims 3 to 5, wherein a second sealing member is disposed between the support portion and the mounting portion, and the second sealing member is disposed surrounding the second penetration hole.

7. The battery according to any one of claims 3 to 6, wherein the support portion comprises an end plate portion and a surrounding plate portion, the surrounding plate portion is disposed surrounding the first penetration hole, the end plate portion is connected to an end of the surrounding plate portion away from the first wall, the mounting portion is supported on a side of the end plate portion away from the first wall, the second penetration hole runs through the end plate portion, an avoidance cavity having an opening facing the first wall is formed between the end plate portion and the surrounding plate portion, the avoidance cavity communicates with the first penetration hole and the second penetration hole, and a cross-sectional area of the avoidance cavity is larger than a cross-sectional area of the second penetration hole.

8. The battery according to claim 7, wherein the surrounding plate portion comprises a first surrounding plate segment and a second surrounding plate segment that are sequentially arranged in a direction from the end plate portion to the first wall, a wall thickness of the first surrounding plate segment gradually decreases in the direction from the end plate portion to the first wall, and a wall thickness of the second surrounding plate segment is greater than a wall thickness of an end portion of the first surrounding plate segment close to the first wall.

9. The battery according to any one of claims 3 to 6, wherein a through hole is provided on the support portion, the through hole is provided corresponding to the first penetration hole, and a hole opening formed by the through hole on a surface of a side of the support portion away from the first wall forms the second penetration hole.

10. The battery according to any one of claims 1 to 9, wherein the adapter is entirely located on the outer side of the first wall.

11. The battery according to any one of claims 1 to 10, wherein the plug-in member is connected to the adapter, and the adapter is connected to the first wall.

12. The battery according to claim 11, wherein the adapter comprises the support portion, the support portion is disposed between the first wall and the mounting portion to support the mounting portion, and the mounting portion is connected to the support portion.

13. The battery according to claim 12, wherein the mounting portion is connected to the support portion by a first connection member, the first connection member comprises a first rod portion and a first head portion, the first head portion abuts against a side of the mounting portion away from the support portion, and the first rod portion extends through the mounting portion and is connected to the support portion.

14. The battery according to claim 12 or 13, wherein the adapter further comprises a connection portion, the connection portion is located at a periphery of the support portion and extends beyond a coverage area of the mounting portion, and the connection portion is connected to the first wall.

15. The battery according to claim 14, wherein the connection portion is connected to the first wall by a second connection member, the second connection member comprises a second rod portion and a second head portion, the second head portion abuts against a side of the connection portion away from the first wall, and the second rod portion extends through the connection portion and is connected to the first wall.

16. The battery according to claim 14 or 15, wherein the adapter further comprises an oblique reinforcing rib connected between the support portion and the connection portion.

17. The battery according to claim 12 or 13, wherein the support portion is connected to the first wall by a third connection member, the third connection member comprises a third rod portion and a third head portion, the third head portion abuts against an inner side of the first wall, and the third rod portion extends through the first wall and is connected to the support portion.

18. The battery according to claim 17, wherein a position at which the support portion is connected to the mounting portion is staggered from a position at which the support portion is connected to the first wall.

19. The battery according to any one of claims 1 to 10, wherein the plug-in member, the adapter, and the first wall are connected together by a fourth connection member.

20. The battery according to claim 19, wherein the fourth connection member comprises a fourth rod portion and a fourth head portion, the fourth head portion abuts against a side of the mounting portion away from the adapter, and the fourth rod portion extends through the mounting portion and the adapter and is connected to the first wall.

21. The battery according to any one of claims 1 to 20, wherein a spacing distance between the mounting portion and the first wall is greater than a wall thickness of the mounting portion in an axial direction of the first penetration hole.

22. The battery according to any one of claims 1 to 21, wherein the box-body assembly comprises a box body, the battery comprises a cell assembly disposed in the box body, the cell assembly comprises a plurality of battery cells, the battery comprises a temperature adjustment member, and the temperature adjustment member comprises at least one of a first temperature adjustment member, a second temperature adjustment member, and a third temperature adjustment member;
the first temperature adjustment member is disposed outside the box body and is attached to an outer wall of the box body;
the second temperature adjustment member is disposed in the box body and is located between the cell assembly and the box-body assembly; and
the third temperature adjustment member is disposed in the box body and is located between neighboring ones of the battery cells.

23. The battery according to any one of claims 1 to 22, wherein the box-body assembly comprises the box body that is integrally stamped and formed, the box body comprises a bottom wall and an enclosure wall, and a side wall of the enclosure wall forms the first wall.

24. The battery according to claim 23, wherein the cell assembly is disposed in the box body, a heat exchange member is laid on the bottom wall of the box body, and the heat exchange member is configured to exchange heat with the cell assembly.

25. The battery according to claim 24, wherein the heat exchange member comprises at least one first heat exchange flow channel, the first heat exchange flow channel comprises a first heat exchange segment, a second heat exchange segment, and a third heat exchange segment, the second heat exchange segment is bent to form a first U-shaped region, the first heat exchange segment is disposed in the first U-shaped region in a bent manner, and is connected to the second heat exchange segment through the third heat exchange segment in a bent manner, and the second heat exchange segment is located on an outermost peripheral side of the first heat exchange flow channel.

26. The battery according to claim 25, wherein the cell assembly comprises a plurality of battery units arranged along a first direction, each of the battery units comprises a plurality of battery cells sequentially stacked along a second direction, and at least a part of the second heat exchange segment correspondingly exchanges heat with a plurality of ones of the battery cells located at an outermost periphery of the cell assembly.

27. The battery according to claim 25 or 26, wherein the heat exchange member further comprises at least one second heat exchange flow channel, the second heat exchange flow channel and the first heat exchange flow channel are bent in a same plane, and the second heat exchange flow channel is disposed in the first U-shaped region of the first heat exchange flow channel in a bent manner.

28. The battery according to claim 27, wherein the at least one second heat exchange flow channel is bent to form a second U-shaped region, and at least a part of the first heat exchange segment is disposed in the second U-shaped region of the second heat exchange flow channel.

29. The battery according to any one of claims 24 to 28, wherein the heat exchange member comprises at least one heat exchange tube extending in a bent manner, a heat exchange flow channel is defined in each heat exchange tube, and the heat exchange tube is of a flat-tube structure.

30. A power consuming apparatus, comprising the battery according to any one of claims 1 to 29.
